# EUROPÄISCHE PATENTSCHRIFT

(11) **EP 4 252 408 B1**
(45) Veröffentlichungstag und Bekanntmachung des Hinweises auf die Patenterteilung: **23.10.2024**
(21) Anmeldenummer: 21810380.2
(22) Anmeldetag: 22.11.2021
(51) Int. Cl.: H04N 1/60, G01J 3/46, G06T 7/90

(54) **VERFAHREN ZUR ERSTELLUNG UND ZUM VERGLEICH VON FARBPROFILEN**
METHOD FOR PRODUCING AND COMPARING COLOUR PROFILES
PROCÉDÉ DE GÉNÉRATION ET DE COMPARAISON DES PROFILS DE COULEURS

(30) Priorität: 24.11.2020 EP 20209466
(43) Veröffentlichungstag der Anmeldung: 04.10.2023
(73) Patentinhaber: SWISS KRONO Tec AG, 6004 Luzern (CH)
(72) Erfinder: DICKE, Sebastian, 16868 Bantikow (DE)
(74) Vertreter: Maikowski & Ninnemann Patentanwälte Partnerschaft mbB
(86) Internationale Anmeldenummer: PCT/EP2021/082501
(87) Internationale Veröffentlichungsnummer: WO 2022/112173

(56) Entgegenhaltungen:
- EP-A1- 3 578 939
- DE-A1- 10 359 322
- IVANOVICI MIHAI ET AL: "Reference-based color texture digitization and analysis of wooden surfaces", 2017 INTERNATIONAL CONFERENCE ON OPTIMIZATION OF ELECTRICAL AND ELECTRONIC EQUIPMENT (OPTIM) & 2017 INTL AEGEAN CONFERENCE ON ELECTRICAL MACHINES AND POWER ELECTRONICS (ACEMP), IEEE, 25 May 2017 (2017-05-25), pages 989 - 994, XP033119450, DOI: 10.1109/OPTIM.2017.7975099

## Beschreibung

### Gebiet der Erfindung

Die vorliegende Erfindung betrifft ein Verfahren zum Vergleich eines Referenzfarbprofils oder der Farbraumgröße des Referenzfarbprofils eines analogen Referenzmusters mit einem dekorspezifischen Farbprofil oder der Farbraumgröße des dekorspezifischen Farbprofils eines digitalen oder analogen Dekors. Im Zuge des Verfahrens wird ein Referenzfarbprofil durch das Einlesen und Speichern von Messdaten mindestens eines Abschnittes eines analogen Referenzmusters mit einem hyperspektralen Flächenmessgerät erzeugt. Erfindungsgemäß wird ein dekorspezifisches Farbprofil entweder aus den digitalen Daten eines digitalen Dekors oder durch hyperspektrale Flächenmessung zumindest eines Ausschnitts eines analogen Dekors erzeugt.

### Beschreibung

Die Farbe ist ein wesentliches Merkmal eines Druckdekors, welches durch verschiedene Techniken, wie z.B. Tiefdruck oder Digitaldruck erzeugt wird. Bei jeder dieser Techniken wird die gewünschte Erscheinung des Drucks durch Überlagerung von verschiedenen Pigmentschichten der Grundfarben erzielt. Das Tiefdruckverfahren ist eine Drucktechnik, bei der die abzubildenden Elemente als Vertiefungen in einer Druckform z.B. einer Druckwalze vorliegen, die vor dem Druck eingefärbt wird. Die Druckfarbe befindet sich vornehmlich in den Vertiefungen und wird aufgrund von Anpressdruck der Druckform und von Adhäsionskräften auf den zu bedruckenden Gegenstand übertragen. Beim Digitaldruck hingegen wird das Druckbild direkt von einem Computer in einen Digitaldrucker wie z.B. ein Laserdrucker oder Tintenstrahldrucker übertragen, wobei die Verwendung von statischen Druckformen entfällt. Beim Digitaldruck werden Farbmodelle verwendet, die verschieden Grundfarben und/oder Sonderfarben umfassen. Beispielsweise umfassen die Farbmodelle 1, 2, 3, 4, 5, 6 oder 7 Grund- und/oder Sonderfarben. Ein üblicherweise im Digitaldruck verwendetes Farbmodell umfasst die Grundfarben Cyan, Magenta, Gelb und Schwarz (CYMK). Das CMYK-Farbmodel ist ein subtraktives Farbmodel, wobei die Abkürzung CMYK für die drei Farbbestandteile Cyan, Magenta, Yellow und den Schwarzanteil Key als Farbtiefe steht. Mit diesem Farbsystem lässt sich ein Farbraum (Gamut) abbilden, der vielen Anforderungen aus verschiedensten Bereichen genügt. Bei einem weiteren Farbsystem kommt statt Magenta ein Rot zum Einsatz, dieses wird als CRYK-Farbmodell bezeichnet. Weiterhin kann beispielsweise ein Farbmodell zum Einsatz kommen, welches zwei verschiedene Gelbtöne, einen rötlichen und einen gelblichen, umfasst. Dieses Farbsystem wird als CRY1Y2K-Farbmodell bezeichnet. Auch die Verwendung von Farbmodellen mit anderen und/oder mehr Sonderfarben sind bekannt. Beispielsweise Farbmodelle mit 6 Farben.

Als Bedruckstoffe eignen sich beispielsweise Papier, Glas, Metall, Folien, Holzwerkstoffplatten, insbesondere MDF- oder HDF-Platten, WPC-Platten, Furniere, Lackschichten, Kunststoffplatten und anorganische Trägerplatten. Bevorzugt gemäß der Erfindung sind Holzwerkstoffplatten.

Mit einem Dekor versehene Holzwerkstoffplatten werden häufig zur Herstellung von Fußbodenlaminat oder in Form von Wand- und Deckenverkleidungselementen verwendet. Zur Dekorierung der Holzwerkstoffplatten gibt es mehrere Ansätze. So wurde in der Vergangenheit häufig die Beschichtung von Holzwerkstoffplatten mit einem Dekorpapier genutzt, wobei der Vielfältigkeit an verschiedengemusterten Dekorpapieren keine Grenzen gesetzt sind. Als Alternative zur Verwendung von Dekorpapieren auf Holzwerkstoffplatten hat sich die Möglichkeit des direkten Bedruckens von Holzwerkstoffplatten entwickelt, wobei ein Bedrucken von Papier und dessen nachträgliches Kaschieren oder Direktbeschichten auf die Holzwerkstoffplatten entfällt. Die hierbei hauptsächlich zum Einsatz kommenden Drucktechniken sind das Tiefdruck- und das Digitaldruckverfahren.

Ein offenes Problem, das in allen Bereichen der farbbasierten bzw. farbverarbeitenden Industrie ein zentrales Thema darstellt, ist die Erreichung eines hohen Grades an Farbtreue, in anderen Worten die Fähigkeit, vorgegebene Farben mit minimaler chromatischer Differenz in Bezug auf ein Original, und zwar insbesondere auch auf unterschiedlichen Trägermaterialien bzw. Bedruckstoffe, zu reproduzieren. Ein wesentlicher Schritt hierfür ist unter anderem die Bestimmung des Farbraums in der Druckvorstufe. Darüber hinaus sollte eine stetige Kontrolle der Druckqualität im gesamten Druckprozess gewährleistet werden. Eine zentrale Qualitätsanforderung bei allen Druckverfahren besteht unter anderem darin, dass Farbabweichungen zwischen einem Urmuster eines Dekors und weiteren Drucken des Dekors nur unterhalb eines vorgegebenen Sollwertes auftreten.

Zentrale Techniken im Druck stellen, wie bereits erwähnt, das Tiefdruck- und das Digitaldruckverfahren dar. Der Digitaldruck ermöglicht die Herstellung eines Druckbildes mit besonders hoher Qualität durch eine höhere Auflösung und erlaubt des Weiteren ein breiteres Anwendungsspektrum bei hoher Flexibilität. Zu Beginn eines Druckprozesses muss zunächst bestimmt werden, ob das zu druckende Dekor mit einem bestimmten Druckverfahren unter definierten Druckparametern, wie verwendeter Drucker und verwendete Farben auf einen bestimmten Bedruckstoff, abgebildet werden kann. Hierfür wird in der Druckvorstufe der Farbraum mit definierten Druckparametern bestimmt. Der in der Druckvorstufe bestimmte Farbraum stellt damit die maximal mögliche Bandbreite an druckbaren Farben im Druckprozess unter den verwendeten Druckparametern dar. Druckparameter im Sinne der Erfindung bezeichnet alle den Druck beeinflussenden Bedingungen. Insbesondere zählen hierzu:
- Verwendete Tinte,
- Verwendung eines Primers und Menge des verwendeten Primers,
- Verwendeter Drucker,
- Viskosität der eingesetzten Flüssigkeiten,
- Umgebungsklima, insbesondere Temperatur und Luftfeuchte,
- Druckköpfe des Druckers und Softwaresteuerung des Druckers,
- Zustand der Oberfläche des Bedruckstoffes,
- Alter und Rezept des verwendeten Primers und/oder der verwendeten Tinte.

Ein Primer oder auch eine Vorgrundierung wird genutzt, um Farbabweichungen zwischen den gedruckten Dekoren einer Produktionscharge bzw. auch zwischen identischen gedruckten Dekoren verschiedener Produktionschargen von vornherein so gering wie möglich zu halten. Darüber hinaus reduziert der Einsatz eines Primers die Menge der Tinte, die für einen Druck verwendet werden muss. Ohne Primer sackt die Tinte weit in das Papier ab und es muss eine größere Menge Tinte verwendet werden, um ein gewünschtes Druckergebnis zu erreichen. Da der Primer deutlich preiswerter ist als Drucktinte, ist mit dessen Verwendung eine deutliche Kostenersparnis verbunden.

Das zu druckende Dekor ist ebenfalls durch einen Farbraum definiert, der alle Farben beinhaltet, die in dem zu druckenden Dekor vorkommen. Ob ein Dekor mit bestimmten Druckparametern auf einen bestimmten Bedruckstoff abgebildet werden kann, kann durch einen Vergleich des Farbraums des zu druckenden Dekors mit dem Farbraum der in der Druckvorstufe bestimmt wurde, festgestellt werden. Fällt der Farbraum des zu druckenden Dekors in den Farbraum oder ist dieser identisch zu dem Farbraum, der in der Druckvorstufe bestimmt wurde, so ist das Dekor unter den in der Druckvorstufe genutzten Druckparametern auf den Bedruckstoff druckbar. Fällt hingegen der Farbraum des zu druckenden Dekors ganz oder teilweise aus dem Farbraum heraus, der in der Druckvorstufe bestimmt wurde, so ist das Dekor unter den in der Druckvorstufe genutzten Druckparametern auf den Bedruckstoff nicht druckbar. Die Bestimmung des Farbraumes ist damit essentiell zum Erreichen einer gewünschten Farbtreue im Druckprozess.

Zur Bestimmung des Farbraums in der Druckvorstufe werden üblicherweise über eine Software (z.B. Colorgate) digitale Farbprofiltargets erstellt und auf einem bestimmten Ausgabegerät und einem bestimmten Bedruckstoff unter definierten Druckparametern ausgegeben. Ein Farbprofiltarget besteht dabei aus einer Fläche, die eine bestimmte Farbe oder in bestimmtes Farbdekor aufweist.

Dabei ist zu beachten, dass eben jene Druckparameter wie Druckverfahren, Drucker und Farbe und auch der Bedruckstoff großen Einfluss darauf haben, wie ein Druckmuster in ausgedrucktem Zustand aussieht. Dasselbe Druckmuster erscheint beispielsweise auf einem glänzenden Papier völlig anders als auf einer matten gemaserten Leinwand. Während der glänzende Ausdruck über hohe Kontraste und gesättigte Farben verfügt, wirkt der Leinwanddruck deutlich kontrastärmer, weniger farbig und oft warmtoniger. Weiterhin haben weitere Druckparameter, wie das Aufbringen eines Primers auf dem Trägerstoff, die Temperatur während des Druckprozesses oder die verwendete Tinte einen Einfluss auf die dargestellten Farben.

Die genannten Druckparameter beeinflussen folglich die Farben, die beim Druckprozess auf einem Bedruckstoff dargestellt werden können und so auch die Farben, die beim Druck des Farbprofiltargets auf dem Bedruckstoff dargestellt werden. Der Farbraum der digital erstellten Farbprofiltargets entspricht daher im Allgemeinen nicht dem Farbraum der gedruckten Farbprofiltargets.

In der Druckvorstufe werden daher die auf einen Bedruckstoff unter definierten Druckparametern (Primer, Tinte, Temperatur, etc.) gedruckten Farbprofiltargets vermessen. Die vermessenen Farbprofiltargets bilden ein Farbprofil. Das Farbprofil spiegelt damit den unter definierten Druckparametern auf einen bestimmten Bedruckstoff tatsächlich darstellbaren Farbraum wider. Aus dem Stand der Technik stehen hierfür verschiedene optische Messverfahren, wie zum Beispiel "Cube" von der Firma Colorgate sowie spektrale Punktmessgeräte, wie zum Beispiel "X-Rite iOne" zur Verfügung.

Die aus dem Stand der Technik bekannten Verfahren weisen jedoch entscheidende Nachteile auf. Im Allgemeinen weist ein Farbprofiltarget eine Fläche von 0,5 cm² bis 1 cm² auf. Die spektralen Punktmessgeräte erfassen von den ohnehin schon kleinen gedruckten Farbprofiltargets nur einen kleinen Ausschnitt. Mit der spektralen Punktmessung kann von der Fläche der gedruckten Farbprofiltargets nur ein Ausschnitt vermessen werden, die Informationen, die in der restlichen Fläche des gedruckten Farbprofiltarget enthalten sind, können hingegen nicht genutzt werden. Aufgrund der punktuellen Erfassung kann es jedoch zu Ungenauigkeiten im Messergebnis kommen. Aus verschiedenen Gründen weist ein Farbprofiltarget unter Umständen keine homogene Farbgebung auf, sondern kann auch Farbabweichungen enthalten. Dies kann beispielsweise durch einen uneinheitlichen Bedruckstoff, eine fehlerhafte Primerschicht oder Fehler beim Druckprozess verursacht werden. Wird das Farbprofiltarget dann an einer Stelle punktuell vermessen, die eine solche Farbabweichung aufweist, so wird das Farbprofil für dieses gedruckte Farbprofiltarget falsch bestimmt.

Wird beispielsweise bei der spektralen Punktmessung eines Farbprofiltargets, welches sehr helles Gelb aufweist, ein dunkler Punkt gemessen, so wird das Farbprofil und damit der Farbraum begrenzt, obwohl dies nicht dem tatsächlich darstellbaren Farbprofil bzw. Farbraum entspricht. Der in der Druckvorstufe bestimmte Farbraum ist damit zu klein. Unter Umständen kann dies dazu führen, dass ein Dekor, welches gedruckt werden soll, als mit diesen Druckparametern auf dem gewählten Bedruckstoff als nicht druckbar eingestuft wird, weil der Farbraum des Dekors größer ist als der in der Druckvorstufe bestimmte Farbraum, obwohl dies gar nicht zutrifft.

Umgekehrt kann es vorkommen, dass in der Druckvorstufe fälschlicherweise ein zu großer Farbraum bestimmt wird. Beispielsweise könnte ein heller leuchtender Punkt in einem gelben Farbprofiltarget vermessen werden, obwohl dieser nicht repräsentativ für das Farbprofiltarget ist. In der Konsequenz könnte dadurch ein Dekor als druckbar eingestuft werden, obwohl der Farbraum des Dekors eigentlich größer ist als der tatsächlich darstellbare Farbraum.

Trotz definierter Bedingungen, unter denen die Farbprofiltargets gedruckt und vermessen werden, besteht daher mit den Methoden aus dem Stand der Technik die Gefahr, dass das gemessene Farbprofil nicht dem tatsächlich darstellbaren Farbprofil entspricht. Darüber hinaus kann bei einer Wiederholung der Bestimmung des Farbprofils bzw. des Farbraums unter identischen Bedingungen ein abweichendes Farbprofil bzw. ein abweichender Farbraum bestimmt werden.

Weiterhin weisen die rein optisch basierten Systeme aus dem Stand der Technik Beschränkungen auf, da diese lediglich auf der Basis der in ihnen integrierten Chips und/oder Sensoren arbeiten, welche auf lichtempfindlichen Bildsensoren basieren.

Ein wesentliches Problem im Druckprozess besteht in der Erreichung eines hohen Grades an Farbtreue, d.h. in der Fähigkeit, vorgegebene Farben mit minimaler chromatischer Differenz in Bezug auf ein Original in einem digitalen Druckprozess wiederzugeben. Dies ist eine zentrale Anforderung von Seiten der Kunden, die eine möglichst exakte Wiedergabe einer Druckvorlage im Druckprozess erwarten.

Ein wichtiger Schritt hierbei ist die genaue Bestimmung des Farbprofils oder des Farbraumes in der Druckvorstufe. Darüber hinaus ist es von zentraler Bedeutung, auch während des Druckprozesses die Farbtreue der gedruckten Dekore regelmäßig zu prüfen, um eine hohe Druckqualität zu gewährleisten.

Aus dem Stand der Technik sind beispielsweise die folgenden Verfahren bekannt:
Die DE 10 2017 202 031 A1 befasst sich mit einer Korrektur von Farbabweichungen in Digitaldruckmaschinen. Ziel des Verfahrens ist es, eine farbgetreue Wiedergabe einer digitalen Druckvorlage im Druckprozess zu ermöglichen. Ein Testmuster wird hierbei mit einem Farbmessgerät vermessen. Durch die Verwendung von Farbmessgeräte wird eine punktuelle Messung des Testmusters, mit den damit verbundenen Nachteilen, vorgenommen.
Die EP 3 020 565 B1 befasst sich mit einem Verfahren zur Erzeugung von farb- und detailgetreuen Wiedergaben eines Druckdekors mit verschiedenen Drucktechniken. Gegenstand des Verfahrens ist es, Dekordrucke auf Trägermaterialien mit vergleichbarer Qualitätsanmutung zu erzeugen, unabhängig davon, ob das Dekor digital oder analog gedruckt wurde.
Die DE 10 2010 007 125 A1 betrifft ein Verfahren zur Bereitstellung und Verwendung von Dekordaten. Die Dekordaten werden dabei durch das Scannen von Mustern existierender Dekore, Schichtstoffe und/oder Echtmaterialien gewonnen. Kern des Verfahrens ist ein Dekordatenmanagement unter Verwendung einer zentralen Dekordatenbank. Die farbgetreue Wiedergabe der Muster, die im Verfahren digitalisiert wurden, durch einen Druckprozess ist nicht Gegenstand des Verfahrens.
EP 3 578 939 A1 befasst sich mit dem Vergleich von Farbprofilen im Dekordruck.

Die Aufgabe der vorliegenden Erfindung ist es, die Nachteile des Standes der Technik zu beheben und ein Verfahren zur Verfügung zu stellen, mit dem eine möglichst hohe Farbtreue von gedruckten Dekoren im gesamten Druckprozess gewährleistet werden kann.

Die Aufgabe wird gelöst durch ein Verfahren zum Vergleich eines Referenzfarbprofils oder der Farbraumgröße des Referenzfarbprofils eines analogen Referenzmusters mit einem dekorspezifischen Farbprofil oder der Farbraumgröße des dekorspezifischen Farbprofils eines digitalen oder analogen Dekors, wobei die Farbraumgröße in einem linearen Farbsystem bestimmt wird, wobei das Verfahren die Schritte umfasst:
a. Einlesen und Speichern von Messdaten mindestens eines Abschnittes eines analogen Referenzmusters mit einem hyperspektralen Flächenmessgerät;
b. Erstellen eines Referenzfarbprofils mittels Software, wobei das Referenzfarbprofil die Mittelwerte der gemessenen Daten des mindestens einen Abschnitts aufweist;
c. Bestimmung und Speicherung der Farbraumgröße des Referenzfarbprofils mittels Software;
d. Erstellen und Speichern eines dekorspezifischen Farbprofils entweder aus den digitalen Daten eines digitalen Dekors oder durch hyperspektrale Flächenmessung zumindest eines Ausschnitts eines analogen Dekors, wobei das dekorspezifische Farbprofil die Mittelwerte der gemessenen Daten des mindestens einen Ausschnitts aufweist;
e. Bestimmung und Speicherung der Farbraumgröße des dekorspezifischen Farbprofils mittels Software;
f. Vergleich der Farbraumgröße des Referenzfarbprofils und der Farbraumgröße des dekorspezifischen Farbprofils.

Das erfindungsgemäße Verfahren umfasst den Vergleich des Referenzfarbprofils oder der Farbraumgröße des Referenzfarbprofils eines analogen Referenzmusters mit einem dekorspezifischen Farbprofil oder der Farbraumgröße des dekorspezifischen Farbprofils eines digitalen oder analogen Dekors.

Gemäß dem erfindungsgemäßen Verfahren wird dabei zumindest ein flächiger Abschnitt eines analogen Referenzmusters mit einem hyperspektralen Flächenmessgerätes vermessen. Die Daten werden anschließend gespeichert. Das hyperspektrale Flächenmessgerät führt eine hyperspektrale Flächenmessung durch, wofür ein hyperspektrales Sensorsystem verwendet wird.

Unter "hyperspektralem Sensorsystem" versteht man ein Sensorsystem, das Bilder von sehr vielen, eng beieinanderliegenden Wellenlängen aufzeichnen kann. Das Auge sieht die Umwelt multispektral in den Wellenlängen der Grundfarben Rot, Grün und Blau. Hyperspektrale Systeme zeichnen Daten von 20 bis 250 unterschiedlichen Kanälen auf, die von Wellenlängen im ultravioletten Bereich bis zum langwelligen Infrarot reichen. Der Vorteil von hyperspektralen Systemen ist, dass Bilder mit einer sehr hohen Detailgenauigkeit und Auflösung aufgenommen und gespeichert werden.

Die hyperspektrale Flächenmessung kann mittels eines hyperspektralen Systems, wie beispielsweise mit einer Hyperspektralkamera oder besonders bevorzugt mittels eines Hyperspektralscanners erfolgen. Im Stand der Technik ist ein entsprechendes Verfahren zur Erzeugung hyperspektraler Bilder als ACMS^{®} (Advanced Colour Measurement System) bekannt. Hyperspektrale Systeme verfügen über eine Vielzahl von Detektoren. Als Ergebnis der Aufzeichnung entsteht ein hyperspektraler Datenwürfel mit zwei räumlichen und einer spektralen Dimension. Zur Erzeugung dieses hyperspektralen Datenwürfels stehen vier grundlegende Techniken zur Verfügung. Mit einem so genannten Schnappschuss wird der gesamte Datensatz mit einem einzigen Detektor-Output geliefert. Beim räumlichen Scannen liefert jeder Detektor-Output das Spektrum von einem schmalen Streifen der Vorlage. Beim spektralen Scannen liefert jeder Detektor-Output eine monochromatische, räumliche Karte der Vorlage. Beim räumlich-spektralen Scannen liefert jeder Detektor-Output eine spektral kodierte, räumliche Karte der Vorlage.

Die hyperspektrale Flächenmessung birgt den Vorteil in sich, dass eine Vorlage mittels hyperspektraler Flächenmessung vermessen wird und anschließend ein Mittelwert der gemessenen Daten berechnet wird. Dieser Mittelwert der gemessenen Daten ist repräsentativ für die hyperspektral vermessene Vorlage. Dabei kann die gesamte Vorlage abschnittsweise mittels hyperspektraler Flächenmessung vermessen werden, wobei für jeden Abschnitt ein Mittelwert der zugehörigen Daten berechnet wird. Die einzelnen Abschnitte grenzen dabei aneinander an, weisen jedoch keine Überlappung miteinander auf. Auf diese Weise wird ein digitales Referenzfarbprofil der gesamten Vorlage erstellt. Das digitale Referenzfarbprofil weist dabei die Mittelwerte der gemessenen Daten in den jeweiligen Abschnitten auf. Weiterhin ist es möglich, dass die Daten der gesamten vermessenen Vorlage genutzt werden, um einen Mittelwert der gemessenen Daten zu berechnen, der dann repräsentativ für die gesamte Vorlage ist.

Erfindungsgemäß wird zumindest ein Abschnitt des analogen Referenzmusters mit einem hyperspektralen Flächenmessgerät vermessen und die Messdaten werden gespeichert. In einer Ausführungsform der vorliegenden Erfindung werden mehrere Abschnitte des analogen Referenzmusters mit einem hyperspektralen Flächenmessgerät vermessen. In einer Ausführungsform können 1 bis 10 000 Abschnitte, bevorzugt 1 bis 5 000 Abschnitte, besonders bevorzugt 1 bis 3 500 Abschnitte des analogen Referenzmusters mit einem hyperspektralen Flächenmessgerät vermessen werden. In einer bevorzugten Ausführungsform wird das gesamte analoge Referenzmuster mit einem hyperspektralen Flächenmessgerät vermessen.

In einer Ausführungsform weisen die Abschnitte eine Fläche zwischen 1 cm² bis 10000 cm², bevorzugt zwischen 50 cm² und 200 cm², besonders bevorzugt zwischen 80 cm² und 100 cm² auf.

Aus den Messdaten wird erfindungsgemäß mindestens ein digitales Referenzfarbprofil mittels Software erstellt. Das Referenzfarbprofil enthält, wie schon beschrieben, die Mittelwerte der Messdaten für den vermessenen Abschnitt des analogen Referenzmusters.

Die Farbraumgröße des Referenzfarbprofils wird mittels Software bestimmt und gespeichert. Geeignete Software hierfür, wie z.B. "Decor Productionserver" eine Software der Firma Colorgate, ist dem Fachmann bekannt. Wie eingangs bereits beschrieben, können im Digitaldruck verschiedene Farbmodelle verwendet werden. Bevorzugt werden erfindungsgemäß Farbmodelle verwendet, die verschieden Grundfarben und/oder Sonderfarben umfassen. Grundsätzlich sind alle Farbmodelle möglich mit 1 bis n Grundfarben und/oder Sonderfarben, mit n e N und n ≥ 1. Bevorzugt umfassen die Farbmodelle 4, 5, 6 oder 7 Grund- und/oder Sonderfarben. Die Grund- und/oder Sonderfarben wiederum können aus 1 bis n Farb- bzw. Tintenpigmentkombinationen bestehen, mit n e N und n ≥ 1. Übliche Pigmente bzw. deren Kombinationen sind dem Fachmann bekannt. In einer Ausführungsform der Erfindung ist das Farbmodel ausgewählt aus der Gruppe aufweisend das CMYK-Farbmodell, das CRYK-Farbmodell und das CRY1Y2K-Farbmodell. Je nach verwendetem Farbmodell wird in diesem die Farbraumgröße bestimmt. Hierbei wird die Farbraumgröße "Gamut" in einem linearen Farbsystem bzw. Farbmodell bestimmt.

Erfindungsgemäß wird weiterhin ein dekorspezifisches Farbprofil entweder aus den digitalen Daten eines digitalen Dekors oder durch hyperspektrale Flächenmessung zumindest eines Abschnitts eines analogen Dekors erstellt und gespeichert. Als digitale oder analoge Dekore können erfindungsgemäß alle denkbaren Dekore dienen. Beispiele für Dekore sind unter anderem Holz-, Fliesen-, Fantasiedekore oder Parkettimitate. Diese Dekore können, wie bereits beschrieben, entweder digital vorliegen oder analog. Analoge Dekore gemäß der vorliegenden Erfindung sind Dekore, die physisch vorliegen. Grundsätzlich sind damit alle Arten von natürlichen und gedruckten Dekoren einsetzbar. Beispiele für solche Dekore sind Holzmaserungen von Holzdekoren, Natursteindekore, die mittels Tiefdruck oder Digitaldruck auf verschiedenen Bedruckstoffen erzeugt werden. Gedruckte Dekore liegen dabei auf einen Bedruckstoff gedruckt vor. Als Bedruckstoffe gemäß der vorliegenden Erfindung eignen sich beispielsweise Papier, Glas, Metall, Folien, Holzwerkstoffplatten, insbesondere MDF- oder HDF-Platten, WPC-Platten, Furniere, Lackschichten, Kunststoffplatten und anorganische Trägerplatten. Bevorzugt gemäß der Erfindung sind Holzwerkstoffplatten und Papier.

Liegt das Dekor digital, zum Beispiel als Druckdatei, vor, wird das dekorspezifische Farbprofil in einer Ausführungsform aus den digitalen Daten errechnet. Hierfür geeignete Software, wie z.B. die Software Colorgate ist dem Fachmann bekannt.

Liegt das Dekor hingegen analog vor, so wird gemäß der vorliegenden Erfindung eine hyperspektrale Flächenmessung zumindest eines Abschnitts des analogen Dekors vorgenommen. In einer Ausführungsform können mehrere Abschnitte des analogen Dekors mittels hyperspektraler Flächenmessung vermessen werden. Insbesondere können 1 bis 10 000 Abschnitte, bevorzugt 1 bis 5 000 Abschnitte, besonders bevorzugt 1 bis 3 500 Abschnitte des analogen Dekors mit einem hyperspektralen Flächenmessgerät vermessen werden. In einer bevorzugten Ausführungsform wird das gesamte analoge Dekor mit einem hyperspektralen Flächenmessgerät vermessen. Aus den Messdaten wird erfindungsgemäß mindestens ein digitales dekorspezifischen Farbprofil mittels Software erstellt. Das dekorspezifische Farbprofil enthält, wie schon beschrieben die Mittelwerte der Messdaten für den vermessenen Ausschnitt des analogen Dekors.

In einer Ausführungsform des erfindungsgemäßen Verfahrens wird zusätzlich die Farbraumgröße des dekorspezifischen Farbprofils mittels Software bestimmt und gespeichert. Geeignete Software hierfür, wie z.B. Decor Productionserver" eine Software der Firma, ist dem Fachmann bekannt. Der Bestimmung der Farbraumgröße liegt wiederum das verwendete Farbmodell zugrunde. Geeignete Farbmodelle sind bereits beschrieben worden.

Erfindungsgemäß wird die Bestimmung der Farbraumgröße des Referenzfarbprofils und der Farbraumgröße des dekorspezifischen Farbprofils im gleichen Farbmodell durchgeführt. Somit können die Farbraumgröße des Referenzfarbprofils und die Farbraumgröße des dekorspezifischen Farbprofils unmittelbar miteinander verglichen werden.

### Vergleich

Erfindungsgemäß werden das Referenzfarbprofil und das dekorspezifischen Farbprofil oder die Farbraumgröße des Referenzfarbprofils und die Farbraumgröße des dekorspezifischen Farbprofils verglichen. Der Vergleich kann automatisiert mittels Software oder manuell durch einen Nutzer durchgeführt werden. Eine geeignete Software für die automatisierte Durchführung des Vergleichs ist dem Fachmann bekannt, wie beispielsweise die Software Colorgate der gleichnamigen Firma.

Der Vergleich kann auch manuell durch einen Nutzer durchgeführt werden und wird dabei basierend auf der Erfahrung des Nutzers vorgenommen. Der Nutzer kann dann auf Grundlage des Vergleichsergebnisses weitere Maßnahmen initiieren.

In einer Ausführungsform der Erfindung wird als Ergebnis des Vergleichs ausgegeben, welche Unterschiede zwischen dem Referenzfarbprofil und dem dekorspezifischen Farbprofil oder zwischen der Farbraumgröße des Referenzfarbprofils und der Farbraumgröße des dekorspezifischen Farbprofils bestehen. In einer bevorzugten Ausführungsform wird als Ergebnis des Vergleichs ausgegeben, ob der Farbraum des dekorspezifischen Farbprofils im Farbraum des Referenzfarbprofils enthalten ist oder davon ganz oder teilweise abweicht.

Im Falle von Abweichungen des Farbraums des dekorspezifischen Farbprofils vom Farbraum des Referenzfarbprofils oder der Farbraumgröße des dekorspezifischen Farbprofils von der Farbraumgröße des Referenzfarbprofils werden durch die Erfindung verschiedene Reaktionsmöglichkeiten bereitgestellt, um die Übereinstimmung zwischen den Farbräumen wiederherzustellen. In einer Ausführungsform der Erfindung wird auf Grundlage des Ergebnisses des Vergleichs des Referenzfarbprofils und des dekorspezifischen Farbprofils oder der Farbraumgröße des Referenzfarbprofils und der Farbraumgröße des dekorspezifischen Farbprofils
- ein Signal ausgegeben; und/oder
- erfolgen Hinweise für vorzunehmende Änderungen der Druckparameter in einem nachfolgenden Druckprozess; und/oder
- werden die Druckdaten eines digitalen Dekors automatisch geändert; und/oder
- wird ein korrigiertes dekorspezifisches Farbprofil berechnet.

Diese Maßnahmen können einzeln oder auch in beliebiger Kombination miteinander erfolgen.

Auf Grundlage des Vergleichsergebnisses können in einer Ausführungsform des erfindungsgemäßen Verfahrens ein oder mehrere Signale entweder automatisiert oder von einem Nutzer initiiert ausgegeben werden. Ein geeignetes Signal kann ein optisches oder auch ein akustisches Signal sein. Dies kann beispielsweise eine akustische Signalausgabe, wie beispielsweise ein Warnton oder Alarmton sein und/oder auch ein optisches Signal auf einer Anzeige. In einer weiteren Ausführungsform der vorliegenden Erfindung ist mit der Ausgabe des Signals auch eine Unterbrechung des Druckprozesses verbunden. Das Signal kann ein Hinweis auf eine unerwünscht große Abweichung des dekorspezifischen Farbprofils vom Referenzfarbprofil verdeutlichen. Das Signal kann aber auch ausgegeben werden, wenn der Vergleich ergibt, dass der Farbraum des dekorspezifischen Farbprofils nicht im Farbraum des Referenzfarbprofils enthalten ist.

In einer weiteren Ausführungsform erfolgt ein Hinweis für vorzunehmende Änderungen der Druckparameter in einem nachfolgenden Druckprozess. Dieser Hinweis kann beispielsweise auf einem Bildschirm angezeigt werden. Vorzunehmende Änderungen der Druckparameter können zum Bespiel ein veränderter Primerauftrag auf den Bedruckstoff vor dem Bedrucken oder eine geänderte Tintenauswahl sein.

Der Primer dient als Grundierung des Bedruckstoffes. Zur Herstellung von einheitlich vorgrundierten Bedruckstoffen, insbesondere von Holzwerkstoffplatten wird in einer Ausführungsform des vorliegenden Verfahrens auf die zu bedruckende Seite der Holzwerkstoffplatte vor dem Bedrucken mit einem Dekor mindestens eine Grundierungsschicht umfassend mindestens ein Harz und/oder mindestens einen Lack aufgetragen, die anschließend angetrocknet und/oder angehärtet wird.

Vorzugsweise wird die zu bedruckende Seite der Holzwerkstoffplatte vor dem Auftragen der Grundierung angeschliffen.

Zur Grundierung kann eine wässrige Harzlösung und/oder eine strahlenhärtbare Spachtelmasse auf die zu bedruckende Seite des Bedruckstoffes aufgetragen werden. Als Grundierungsmittel sind z.B. wässrige Harzlösungen wie Melamin-Formaldehyd-Harz, Harnstoff-Formaldehyd-Harz oder Melamin-Harnstoff-Formaldehyd-Harz einsetzbar. Es ist ebenfalls möglich, den Bedruckstoff mit 1K/2K-Acrylat-, UV- und/oder ESH-Spachtel vorzubeschichten bzw. zu grundieren und anschließend diese Grundierungsschicht entsprechend auszuhärten.

Vorzugsweise wird für die Vorbeschichtung bzw. Grundierung der Holzwerkstoffplatte eine wässrige Harzlösung verwendet, die eine wässrige Harzlösung, insbesondere eine wässrige Lösung eines Melamin-Formaldehyd-Harzes, Harnstoff-Formaldehyd-Harzes oder Melamin-Harnstoff-Formaldehyd-Harz.

Die Auftragsmenge an flüssiger Harzlösung zur Grundierung kann zwischen 10 und 80 g/m², bevorzugt 20 und 50 g/m² betragen. Der Feststoffgehalt der wässrigen Harzlösung liegt zwischen 30 und 80%, bevorzugt 40 und 60%, insbesondere bevorzugt bei 55%. Das Flüssigharz kann zusätzlich geeignete Netzmittel, Härter, Trennmittel und Entschäumer aufweisen.

Nach Auftragen der wässrigen Harzlösung auf die Holzwerkstoffplatte zur Vorbeschichtung bzw. Grundierung derselbigen wird das Flüssigharz auf eine Feuchte von 10%, bevorzugt 6% z.B. in einem Konvektionsofen oder Nahinfrarot-Ofen getrocknet.

In einer anderen Ausführungsform des vorliegenden Verfahrens kann die Holzwerkstoffplatte mit 1K/2K-Acrylat-, und/oder ESH-Spachtel vorbeschichtet bzw. grundiert werden. Eine UV-Spachtelmasse besteht vorteilhafterweise im Wesentlichen aus UV-härtbaren Lackkomponenten, Pigmenten, Reaktivverdünner und Radikalbildnern als Kettenstarter.

Die Auftragsmenge der Spachtelmasse kann in diesem Fall 50 bis 150 g/m², bevorzugt 50 bis 100 g/m² betragen. Die Mengenangaben beziehen sich dabei auf eine 100%ige Spachtelmasse.

Ebenfalls ist es möglich, dass die zur Grundierung verwendete Spachtelmasse pigmentiert vorliegt, wodurch das Druckergebnis variiert oder verbessert werden kann.

Besonders bevorzugt gemäß der Erfindung ist die Vorbeschichtung der Holzwerkstoffplatte mit einer transparenten Grundierung.

In einer weiteren Ausführungsform des vorliegenden Verfahrens wird vor dem Bedrucken der mindestens einen Seite der Holzwerkstoffplatte mindestens eine Schicht einer pigmentierten Grundierung, die vorzugsweise wasserbasiert ist, auf die zu bedruckende Seite der Holzwerkstoffplatte aufgetragen. Die pigmentierte Grundierung kann entweder direkt auf die unbehandelte Oberfläche der Werkstoffplatte oder auch auf die vorherige, vorzugsweise transparente Grundierung aufgetragen werden.

Die wasserbasierte pigmentierte Grundierung kann auch in mehr als einer Schicht aufgetragen werden (z.B. 3 bis 10 Schichten, bevorzugt 5 bis 8 Schichten, besonders bevorzugt 7 Schichten), wobei nach jedem Schichtauftrag die pigmentierte Grundierung z.B. in einem Konvektionstrockner oder einem Nahinfrarot-Trockner getrocknet wird. Die wasserbasierte pigmentierte Grundierung enthält vorzugsweise mindestens ein Pigment einer hellen Farbe, besonders bevorzugt mindestens ein Weißpigment.

Weißpigmente sind unbunte anorganische Pigmente mit einem hohen Brechungsindex (größer als 1,8), die vor allem zur Erzeugung von optischer Weiße in Anstrichmitteln oder als Füllstoff in z. B. Kunststoffen verwendet werden. Weißpigmente gemäß der Erfindung können ausgewählt sein aus der Gruppe umfassend Titandioxid, Lithopone, Bariumsulfat, Zinkoxid, Zinksulfid und Calciumsulfat. Lithopone ist ein Weißpigment, das Bariumsulfat und Zinksulfid beinhaltet. Gemäß der Erfindung wird vorzugsweise Titandioxid als Weißpigment in der wasserbasierten pigmentierten Grundierung eingesetzt, da Titandioxid den höchsten Brechungsindex und somit die höchste Deckkraft unter den bekannten Weißpigmenten aufweist.

In einer weiteren Ausführungsform der vorliegenden Erfindung erfolgt eine automatische Änderung der Druckdaten eines digitalen Dekors. Die Änderung der Druckdaten und/oder der Hinweis auf vorzunehmende Änderungen der Druckparameter dient dazu, die Qualität im Druckprozess zu steigern.

In einer weiteren Ausführungsform der Erfindung wird auf Grundlage des Ergebnisses des Verfahrensschritts f. ein korrigiertes Farbprofil mittels einer geeigneten Software berechnet, wenn das dekorspezifische Farbprofil Farben enthält, die nicht im Referenzfarbprofil enthalten sind, bzw. sich der Farbraum des dekorspezifischen Farbprofils teilweise oder ganz nicht mit dem Farbraum des Referenzfarbprofils deckt. Dieses korrigierte Farbprofil kann wiederum für eine Anpassung der Druckdaten des digitalen Dekors verwendet werden. In dieser Ausführungsform umfasst das erfindungsgemäße Verfahren daher weiterhin den Verfahrensschritt des Berechnens eines korrigierten Farbprofils.

Enthält das dekorspezifische Farbprofil Farben, die nicht im Referenzfarbprofil enthalten sind, bzw. deckt sich der Farbraum des dekorspezifischen Farbprofils teilweise oder ganz nicht mit dem Farbraum des Referenzfarbprofils, so ist die Dekorvorlage oder das analoge Dekor nicht unter den verwendeten Bedingungen (Bedruckstoff, Druckparameter) druckbar.

### Ähnlichkeitsindex

In einer Ausführungsform der vorliegenden Erfindung wird als Ergebnis des Vergleichs ein Ähnlichkeitsindex ausgegeben. Ganz allgemein repräsentiert der Ähnlichkeitsindex die Abweichung zwischen zwei Messwerten. Je größer der Ähnlichkeitsindex ist, desto weniger weichen die Messwerte voneinander ab. Der Ähnlichkeitsvergleich wird durch eine Software auf einer Recheneinheit durchgeführt. Wird das ACMS^{®} Verfahren für die hyperspektrale Flächenmessung verwendet, kann der Ähnlichkeitsvergleich vorteilhafterweise über den Ähnlichkeitsindex der zugehörigen Software erfolgen. Diese Anwendung ist dem Fachmann bekannt.

Je größer der Ähnlichkeitsindex also ist, desto weniger weichen das Referenzfarbprofil und das dekorspezifischen Farbprofil beziehungsweise die Farbraumgröße des Referenzfarbprofils und die Farbraumgröße des dekorspezifischen Farbprofils voneinander ab. Desto farbgetreuer ist demnach das analoge Referenzmusters zum digitalen oder analogen Dekor und umgekehrt.

In einer Ausführungsform der vorliegenden Erfindung wird für den Ähnlichkeitsindex ein Sollwert vorgegeben, der nicht unterschritten werden soll. Der Sollwert wird in Abhängigkeit des Dekors und der darin enthaltenen Farben festgelegt. Ebenso kann der Anspruch eines Kunden an die farbgetreue Wiedergabe eines Dekors durch die Wahl des Sollwertes berücksichtigt werden. Der Sollwert wird in % angegeben und liegt im Bereich von 75% bis 100%, bevorzugt im Bereich von 85% bis 100%, besonders bevorzugt im Bereich von 89% bis 100%. Je höher der Sollwert gewählt wird desto weniger Farbabweichungen zwischen dem analogen Referenzmuster und dem digitalen oder analogen Dekor werden toleriert.

Wenn der Ähnlichkeitsindex unterhalb eines vorgegebenen Sollwertes liegt, werden von dem erfindungsgemäßen Verfahren verschiedene Reaktionsmöglichkeiten bereitgestellt, um die Abweichungen von dem Sollwert zu korrigieren. Dann umfasst das erfindungsgemäße Verfahren weiterhin die Schritte:
- Ausgabe eines Signals; und/oder
- Ausgabe eines Hinweises auf vorzunehmende Änderungen der Druckparameter in einem nachfolgenden Druckprozess; und/oder
- Automatische Änderung der Druckdaten eines digitalen Dekors; und/oder
- Berechnen eines korrigierten dekorspezifischen Farbprofils.

Die Schritte können dabei einzeln oder auch in beliebiger Kombination miteinander erfolgen. Ein geeignetes Signal kann ein optisches oder auch ein akustisches Signal sein. Diese wurden oben bereits näher beschrieben.

In einer Ausführungsform erfolgt ein Hinweis auf zu ändernde Druckparameter in einem nachfolgenden Druckprozess, wenn der Ähnlichkeitsindex unterhalb eines vorgegebenen Sollwertes liegt. Dieser Hinweis kann beispielsweise auf einem Bildschirm angezeigt werden. Vorzunehmende Änderungen der Druckparameter können zum Bespiel ein veränderter Primerauftrag auf den Bedruckstoff vor dem Bedrucken oder eine geänderte Tintenauswahl sein.

In einer weiteren Ausführungsform der vorliegenden Erfindung erfolgt eine automatische Änderung der Druckdaten eines digitalen Dekors wenn der Ähnlichkeitsindex unterhalb eines vorgegebenen Sollwertes liegt. Die Änderung der Druckdaten und/oder der Hinweis auf geänderte Druckparameter dient dazu, den Ähnlichkeitsindex zu erhöhen und damit die Qualität im Druckprozess zu steigern.

In einer weiteren Ausführungsform der Erfindung wird, wenn der Ähnlichkeitsindex unterhalb eines vorgegebenen Sollwertes liegt, ein korrigiertes Farbprofil mittels einer geeigneten Software berechnet, wenn die Abweichung des Referenzfarbprofils vom dekorspezifischen Farbprofil oder die Abweichung der Farbraumgröße des Referenzfarbprofils von der Farbraumgröße des dekorspezifischen Farbprofils zu groß ist. Dieses korrigierte Farbprofil kann wiederum für eine Anpassung der Druckdaten des digitalen Dekors verwendet werden. In dieser Ausführungsform umfasst das erfindungsgemäße Verfahren daher weiterhin den Verfahrensschritt des Berechnens eines korrigierten Farbprofils.

Aufgrund des Vergleichs des Referenzfarbprofils und des dekorspezifischen Farbprofils oder der Farbraumgröße des Referenzfarbprofils und der Farbraumgröße des dekorspezifischen Farbprofils kann in einer Ausführungsform der Erfindung ein Qualitätszertifikat für einen Druckauftrag erstellt werden. Das Qualitätszertifikat für einen Druckauftrag wird beispielsweise erstellt, in dem Messdaten des dekorspezifischen Farbprofils mit denen des Referenzfarbprofils verglichen werden und als Nachweis ausgegeben werden.

### Analoge Referenzmuster

Die analogen Referenzmuster sind erfindungsgemäß Referenzmuster, die auf Bedruckstoffen vorliegen. Die Referenzmuster können dabei jegliche Arten von Dekoren aufweisen, insbesondere auch Farbprofiltargets. Weitere Beispiele für Dekore sind unter anderem Holz-, Fliesen-, Fantasiedekore oder Parkettimitate.

Als Bedruckstoffe gemäß der vorliegenden Erfindung eignen sich beispielsweise Papier, Glas, Metall, Folien, Holzwerkstoffplatten, insbesondere MDF- oder HDF-Platten, WPC-Platten, Furniere, Lackschichten, Kunststoffplatten und anorganische Trägerplatten. Bevorzugt gemäß der Erfindung sind Holzwerkstoffplatten und Papier.

### Ermittlung des Farbraums für analoge Referenzmuster

In einer Ausführungsform weist das analoge Referenzmuster mindestens ein Farbprofiltarget auf. Besonders bevorzugt weist das analoge Referenzmuster Farbprofiltargets auf, die unter definierten Druckparametern auf einen Bedruckstoff gedruckt worden sind, um in der Druckvorstufe eines Druckprozesses den Farbraum zu bestimmen, der mit diesen Druckparametern auf dem Bedruckstoff druckbar ist.

Das analoge Referenzmuster wird erzeugt, indem
- mindestens ein digitales Farbprofiltarget mittels einer Software erstellt und gespeichert wird; und
- das mindestens eine digitale Farbprofiltarget auf einen Bedruckstoff mit einem Ausgabegerät unter definierten Druckparametern ausgegeben wird.

Das analoge Referenzmuster weist in einer Ausführungsform 1 bis 10 000 Farbprofiltargets, bevorzugt 1 000 bis 5 000, besonders bevorzugt 2 500 bis 3 500 Farbprofiltargets auf. Die Farbprofiltargets sind dabei erfindungsgemäß unter definierten Druckparametern auf einen definierten Bedruckstoff gedruckt.

Die Ausgabe des mindestens einen digitalen Farbprofiltargets auf einen Bedruckstoff kann dabei mittels digitalem Druck erfolgen. Der digitale Druck kann dabei direkt oder auch indirekt ausgeführt werden. Besonders bevorzugt erfolgt die Ausgabe mittels digitalem Direktdruck.

Weist das analoge Referenzmuster Farbprofiltargets auf, so wird in einer Ausführungsform der Erfindung ein Verfahren mit den folgenden Schritten zur Verfügung gestellt:
- Erstellen und Speichern von mindestens einem Farbprofiltarget mittels einer Software;
- Ausgabe des mindestens einen Farbprofiltargets auf einen Bedruckstoff mit einem Ausgabegerät unter definierten Druckparametern, wobei das auf den Bedruckstoff ausgegebene mindestens eine Farbprofiltarget das analoge Referenzmuster darstellt;
- Vermessen und Speichern von Messdaten mindestens eines Abschnitts eines analogen Referenzmusters mit einem hyperspektralen Flächenmessgerät;
- Erstellen mindestens eines Referenzfarbprofils mittels Software;
- Optional Bestimmung und Speicherung der Farbraumgröße des Referenzfarbprofils mittels Software;
- Erstellen und Speichern eines digitalen Dekors, wobei das digitale Dekor mindestens ein dekorspezifisches Farbprofiltarget aufweist;
- Erstellen eines dekorspezifischen Farbprofils aus den digitalen Daten des digitalen Dekors;
- Optional Bestimmung und Speicherung der Farbraumgröße des dekorspezifischen Farbprofils mittels Software;
- Vergleich des Referenzfarbprofils und des dekorspezifischen Farbprofils oder der Farbraumgröße des Referenzfarbprofils und der Farbraumgröße des dekorspezifischen Farbprofils.

Erfindungsgemäß wird mindestens ein Abschnitt des analogen Referenzmusters mit einem hyperspektralen Flächenmessgerät vermessen. Besonders bevorzugt wird in dieser Ausführungsform das gesamte analoge Referenzmuster abschnittsweise mit einem hyperspektralen Flächenmessgerät vermessen. Ein Abschnitt weist dabei bevorzugt ein Farbprofiltarget auf. Besonders bevorzugt entspricht ein Abschnitt genau einem Farbprofiltarget. Folglich werden alle Farbprofiltargets des analogen Referenzmusters mit einem hyperspektralen Flächenmessgerät vermessen.

In einer weiteren Ausführungsform der Erfindung wird ein digitales Dekor aus den Daten einer digitalen Dekorvorlage oder durch hyperspektrale Flächenmessung zumindest eines Abschnitts eines analogen Dekors erstellt. Die Erstellung des digitalen Dekors aus den Daten einer digitalen Dekorvorlage wird durch bereits aus dem Stand der Technik bekannte Software umgesetzt. Das digitale Dekor weist erfindungsgemäß mindesten ein dekorspezifisches Farbprofiltarget auf. Unter digitaler Dekorvorlage wird in diesem Falle ein Dekor verstanden, dessen Druckdaten digital, beispielsweise in einer Druckdatei, vorliegen. Beispiele für Dekore der digitalen Dekorvorlage sind unter anderem Holz-, Fliesen-, Fantasiedekore oder Parkettimitate.

Wird das digitale Dekor aus einem analogen Dekor erzeugt, so wird gemäß der vorliegenden Erfindung eine hyperspektrale Flächenmessung zumindest eines Abschnitts des analogen Dekors vorgenommen. In einer Ausführungsform können mehrere Abschnitte des analogen Dekors mittels hyperspektraler Flächenmessung vermessen werden. Insbesondere können 1 bis 10 000 Ausschnitte, bevorzugt 1 bis 5 000 Abschnitte, besonders bevorzugt 1 bis 3 500 Abschnitte des analogen Dekors mit einem hyperspektralen Flächenmessgerät vermessen werden. In einer bevorzugten Ausführungsform wird das gesamte analoge Dekor mit einem hyperspektralen Flächenmessgerät vermessen. Aus den Messdaten wird ein digitales Dekor erzeugt, welches mindesten ein dekorspezifisches Farbprofiltarget aufweist. Das dekorspezifische Farbprofiltarget enthält, wie bereits beschrieben, die Mittelwerte der Messdaten für den vermessenen Abschnitt des analogen Dekors. Bevorzugt wird das analoge Dekor derart einer hyperspektralen Flächenmessung unterzogen, dass mehrere dekorspezifische Farbprofiltargets erstellt werden. Bevorzugt werden so viele dekorspezifische Farbprofiltargets erstellt, dass zumindest ein Teil des Farbraums des analogen Dekors durch die dekorspezifischen Farbprofiltargets repräsentiert wird. Mit einem Teil des Farbraums ist in einer Ausführungsform gemeint, das 50% bis 99%, bevorzugt 75% bis 99%, besonders bevorzugt 85% bis 99% des Farbraums des analogen Dekors durch die dekorspezifischen Farbprofiltargets repräsentiert wird. Besonders bevorzugt werden so viele dekorspezifische Farbprofiltarget erstellt, dass der gesamte Farbraum des analogen Dekors durch die dekorspezifischen Farbprofiltargets repräsentiert wird. Dies kann beispielsweise durch eine Unterteilung des gesamten analogen Dekors in Abschnitte erfolgen, wobei jeder der Abschnitte durch eine hyperspektrale Flächenmessung vermessen wird, für jeden Abschnitt der Mittelwert der Messdaten berechnet wird und somit jedem Abschnitt ein dekorspezifisches Farbprofiltarget zugeordnet werden kann.

Aus den digitalen Daten des digitalen Dekors wird mittels Software ein dekorspezifisches Farbprofil erstellt. Eine hierfür geeignete Software, wie beispielsweise die Software Colorgate der gleichnamigen Firma, ist dem Fachmann bekannt. Optional wird mittels Software die Farbraumgröße des dekorspezifischen Farbprofils bestimmt und gespeichert.

Erfindungsgemäß werden das Referenzfarbprofil und das dekorspezifische Farbprofil oder die Farbraumgröße des Referenzfarbprofils und die Farbraumgröße des dekorspezifischen Farbprofils miteinander verglichen. Die Durchführung des Vergleichs kann wie bereits beschrieben durchgeführt werden.

Beinhaltet das Referenzmuster die Farbprofiltargets für den Druck auf einen definierten Bedruckstoff unter definierten Druckparametern, spiegelt dieses den unter den verwendeten Bedingungen druckbaren Farbraum wider. Beinhaltet das digitale Dekor die dekorspezifischen Farbprofiltargets eines digitalen Dekors, so kann eine Aussage über die Druckbarkeit der zugrundeliegenden Dekorvorlage oder des zugrundeliegenden analogen Dekors auf den definierten Bedruckstoff unter den definierten Druckbedingungen getroffen werden. Hierfür werden das Referenzfarbprofil und das dekorspezifische Farbprofil oder die Farbraumgröße des Referenzfarbprofils und die Farbraumgröße des dekorspezifischen Farbprofils miteinander verglichen.

Enthält das dekorspezifische Farbprofil Farben, die nicht im Referenzfarbprofil enthalten sind, bzw. deckt sich der Farbraum des dekorspezifischen Farbprofils teilweise oder ganz nicht mit dem Farbraum des Referenzfarbprofils, so ist die Dekorvorlage oder das analoge Dekor nicht unter den verwendeten Bedingungen (Bedruckstoff, Druckparameter) druckbar.

Der Farbraum des dekorspezifischen Farbprofils muss in dem Farbraum des Referenzprofils enthalten sein, damit alle Farben, die in der Dekorvorlage oder im analogen Dekor enthalten sind, unter den verwendeten Bedingungen (Bedruckstoff, Druckparameter) druckbar sind.

Wenn die betrachteten Farbräume voneinander abweichen, führt das Ergebnis des Vergleichs, wie bereits beschrieben, zur Ausgabe eines Signals.

Das erfindungsgemäße Verfahren hat insbesondere den Vorteil, dass nicht nur punktuell, wie mit den aus dem Stand der Technik bekannten Verfahren, die Farbwerte eines gedruckten Farbprofiltargets erfasst werden, sondern eine flächige Messung vorgenommen wird. Von der hyperspektral vermessenen Fläche wird erfindungsgemäß ein Mittelwert gebildet, der dann den Farbwert des Farbprofiltargets repräsentiert. Ungenauigkeiten durch eine inhomogene Farbgebung eines analogen Farbprofiltargets können dadurch vermieden werden. Hierdurch wird die Genauigkeit bei der Bestimmung von Farbprofilen und Farbräumen in der Druckvorstufe wesentlich erhöht.

Das Risiko der Begrenzung oder Beschneidung des Farbraumes in der Druckvorstufe, wie eingangs erläutert, wird durch das erfindungsgemäße Verfahren damit wesentlich vermindert. Vorteilhafterweise wird für die Vermessung des analogen Referenzmusters und des analogen Dekors nicht nur ein rein optisches System verwendet, sondern ein hyperspektrales Flächenmessgerät. Optische Messsysteme bieten durch die Parameter der verwendeten Chips und Sensoren nur eingeschränkte Möglichkeiten zur Erfassung des Farbprofils bzw. Farbraums von Dekoren. Ein hyperspektrales Flächenmessgerät erfasst wesentlich mehr Messdaten und erhöht damit wiederum die Datenqualität, die zur Verfügung steht, um ein Farbprofil oder einen Farbraum zu berechnen. Das erfindungsgemäße Verfahren kann daher zur Farbraumbestimmung in der Druckvorstufe verwendet werden.

### Urmuster

Weiterhin kann eine hyperspektrale Flächenmessung in vielen anderen Produktionsschritten wie Ausmusterung, Urmusterherstellung, Produktionsüberwachung, Imprägnierung, Verpressung oder Fußbodenprofilierung dafür genutzt werden, um ein Dekor hyperspektral flächig zu vermessen und die Messdaten mit einem für den jeweiligen Prozessschritt vorhandenen Urmuster zu vergleichen und ggf. bei Abweichungen die Produktionsparameter anzupassen und/oder manuell oder automatisiert zu steuern, Signale auszugeben oder auch z.B. manuell oder automatisiert eine Sortierung von Chargen, beispielsweise nach Farbreihen, zu veranlassen.

Weiterhin kann das erfindungsgemäße Verfahren zur Erstellung eines Urmuster und zum Qualitätsabgleich mit diesem Urmuster hinsichtlich der Farbtreue im weiteren Druckprozess Anwendung finden.

In einer weiteren Ausführungsform ist das analoge Referenzmuster ausgewählt aus der Gruppe enthaltend
- auf Bedruckstoff gedrucktes digitales Dekor;
- weiterverarbeitetes auf Bedruckstoff gedrucktes digitales Dekor;
wobei die Weiterverarbeitung die Schritte des Imprägnierens, Verpressens und/oder Profilierens einzeln oder in Kombination miteinander umfasst.

Das analoge Referenzmuster wird in einer Ausführungsform durch die Ausgabe eines digitalen Dekors unter definierten Druckparametern auf einem Bedruckstoff erzeugt. Geeignete digitale Dekore wurden bereits beschrieben. Das digitale Dekor stellt dabei zumindest einen Abschnitt eines Rapports eines Dekors dar oder besonders bevorzugt den gesamten Rapport. Erfindungsgemäß wird mindestens ein Abschnitt des analogen Referenzmusters mit einem hyperspektralen Flächenmessgerät vermessen. In einer Ausführungsform wird das gesamte analoge Referenzmuster mit einem hyperspektralen Flächenmessgerät vermessen. Aus den Messdaten wird ein Referenzfarbprofil erstellt. Dieses kann als Urmuster verwendet werden.

Wird das dem analogen Referenzmuster zu Grunde liegende digitale Dekor im weiteren Produktionsprozess auf einen Bedruckstoff gedruckt, wird von dem gedruckten Dekor erfindungsgemäß im Verfahrensschritt d. ein dekorspezifisches Farbprofil durch hyperspektrale Flächenmessung zumindest eines Abschnitts des gedruckten Dekors erstellt. Der Abschnitt oder die Abschnitte des gedruckten Dekors, die für die Erstellung des dekorspezifischen Farbprofils verwendet werden, sind dabei vorzugsweise äquivalent zu dem Abschnitt oder den Abschnitten des analogen Referenzmusters, die für die Erstellung des Referenzfarbprofils verwendet werden.

Weiterhin kann das analoge Referenzmuster ein weiterverarbeitetes auf Bedruckstoff gedrucktes digitales Dekor sein. Weiterverarbeitungsschritte können in diesem Zusammenhang beispielsweise das Verpressen des bedruckten Bedruckstoffes mit einem weiteren Trägerstoff, z.B. einer Holzwerkstoffplatte, oder mit einer Imprägnierschicht, das Imprägnieren des bedruckten Bedruckstoffes oder auch das Profilieren des bedruckten Bedruckstoffes sein. Die Weiterverarbeitungsschritte können jeweils einzeln oder in Kombination miteinander angewendet werden. Insbesondere das Verpressen kann in einer Kurztakt Presse (KT-Presse) stattfinden.

Beim Imprägnieren kann mindestens eine Schutzschicht, vorzugsweise zwei oder drei Schichten umfassend abriebfeste Partikel, natürliche Fasern, synthetische Fasern und/oder weitere Additive auf das auf den Bedruckstoff gedruckte Dekor aufgetragen werden, wobei Harze wie Melamin-Formaldehyd-Harz, Harnstoff-Formaldehyd-Harz, Acrylatharze und Polyurethanharze als geeignete Bindemittel zum Einsatz kommen können.

Die abriebfesten Partikel sind bevorzugt ausgewählt aus der Gruppe enthaltend Aluminiumoxide, Korund, Borcabide, Siliciumdioxide, Siliciumcarbide und Glaskugeln. Als natürliche und/oder synthetische Fasern, insbesondere Fasern ausgewählt aus der Gruppe enthaltend Holzfasern, Zellulosefasern, Wollfasern, Hanffasern und organische oder anorganische Polymerfasern zum Einsatz.

Als Additive können leitfähige Substanzen, Flammschutzmittel, luminiszierende Stoffe und Metalle zugegeben werden. Dabei können die leitfähigen Substanzen ausgewählt sein aus der Gruppe enthaltend Ruß, Kohlefasern, Metallpulver und Nanopartikel, insbesondere Kohlenstoffnanoröhren. Es können auch Kombinationen dieser Substanzen zum Einsatz kommen. Als Flammschutzmittel werden bevorzugt Phosphate, Borate, insbesondere Ammoniumpolyphosphat, Tris(tri-bromneopentyl)phosphat, Zinkborat oder Borsäurekomplexe von mehrwertigen Alkoholen verwendet. Als luminiszierende Stoffe werden bevorzugt fluoreszierende und/oder phosphoreszierende Stoffe auf anorganischer oder organischer Basis, insbesondere Zinksulfit und Erdalkalialuminate verwendet.

In einer weiteren Ausführungsform des vorliegenden Verfahrens wird das bedruckte und gegebenenfalls mit einer Schutzschicht, insbesondere aus Formaldehydharzen, versehene auf einen Bedruckstoff gedruckte Dekor in einer Kurztakt (KT)-Presse weiter bearbeitet bzw. veredelt. In der KT-Presse werden die Harzschichten aufgeschmolzen und der Schichtverbund zu einem Laminat ausgehärtet. Während der Weiterverarbeitung in der KT-Presse können unter Verwendung eines strukturierten Pressbleches auch Oberflächenstrukturen in der Oberfläche des Trägermaterials wie einer Holzwerkstoffplatte erzeugt werden, die optional auf das Dekor abgestimmt ausgeführt sein können (so genannte dekorsynchrone Struktur). Dieser Weiterverarbeitungsschritt wird auch als Profilierung bezeichnet. Bei Holzdekoren können die Strukturen in Form von Porenstrukturen vorliegen, die der Maserung folgen. Bei vielen Dekoren können die Strukturen Vertiefungen im Bereich von dem Dekor umfasster Fugen Füllungslinien sein.

Erfindungsgemäß wird zumindest ein Abschnitt des analogen Referenzmuster in Schritt a. mit einem hyperspektralen Flächenmessgerät vermessen und aus den Messdaten wird im Verfahrensschritt b. ein Referenzfarbprofil erstellt. Dieses Referenzprofil kann als Urmuster verwendet werden.

Das dem analogen Dekor zu Grunde liegende digitale Dekor wird im weiteren Produktionsprozess erneut auf einen Bedruckstoff aufgebracht und weiterverarbeitet. Gemäß dem erfindungsgemäßen Verfahren dient das gedruckte und weiterverarbeitete Dekor als analoges Dekor, von dem im Verfahrensschritt d. ein dekorspezifisches Farbprofil durch hyperspektrale Flächenmessung zumindest eines Abschnitts des gedruckten Dekors erstellt wird. Bevorzugt sind das Urmuster und das analoge Dekor auf vergleichbaren Bedruckstoffen gedruckt und in vergleichbarer Weise weiterverarbeitet worden.

Durch den Vergleich des Urmusters und des dekorspezifischen Farbprofils gemäß Verfahrensschritt f. kann damit eine in-line Qualitätsprüfung im Druckprozess in Bezug auf ein Urmuster vorgenommen werden. Diese Qualitätsprüfung stellt eine hohe Farbtreue während des gesamten Druckprozesses und während der Weiterverarbeitungsschritte sicher. In einer bevorzugten Ausführungsform wird das Ergebnis des Vergleichs im Verfahrensschritt f. durch einen Ähnlichkeitsindex ausgegeben. Durch die Festlegung eines Sollwertes für den Ähnlichkeitsindex, wie bereits beschrieben, kann damit die gewünschte Farbtreue im Druckprozess festgelegt und überprüft werden.

Bei Abweichungen des dekorspezifischen Farbprofils vom Urmuster kann in einer Ausführungsform der Erfindung ein Signal ausgegeben werden. Geeignete Signale wurden bereits beschrieben.

In einer weiteren Ausführungsform wird, bei einer Abweichung des dekorspezifischen Farbprofils vom Urmuster, auf Grundlage des Ergebnisses des Verfahrensschritts f. ein korrigiertes Farbprofil mittels einer geeigneten Software berechnet, wenn die Abweichung des Referenzfarbprofils vom dekorspezifischen Farbprofil oder die Abweichung der Farbraumgröße des Referenzfarbprofils von der Farbraumgröße des dekorspezifischen Farbprofils zu groß ist. Dieses korrigierte Farbprofil kann für den weiteren Druckprozess des Dekors genutzt werden, womit die Farbtreue zum Urmuster verbessert werden kann. In dieser Ausführungsform umfasst das erfindungsgemäße Verfahren daher weiterhin den Verfahrensschritt des Berechnens eines korrigierten Farbprofils.

Durch das erfindungsgemäße Verfahren wird ein hohe farbtreue im gesamten Druckprozess sichergestellt. Dies kann dazu genutzt werden, um Druckaufträge zu zertifizieren. In einer Ausführungsform der Erfindung wird ein Qualitätszertifikat für einen Druckauftrag erstellt, in dem Messdaten des dekorspezifischen Farbprofils mit denen eines Urmusters verglichen werden und als Nachweis ausgegeben werden.

Weiterhin kann das erfindungsgemäße Verfahren in der Überwachung eines Druckprozesses und der nachfolgenden Weiterverarbeitungsschritte wie dem Imprägnieren, Verpressen und/oder Profilieren von gedruckten Dekoren verwendet werden. Hierfür können in einer Ausführungsform der Erfindung hyperspektrale Flächenmessungen nach den verschiedenen Weiterverarbeitungsschritten vorgenommen werden. Damit können die gedruckten Dekore nach den verschiedenen Weiterverabeitungsschritten als analoge Dekore gemäß dem Verfahrensschritt d. genutzt werden, so dass von diesen analogen Dekoren dekorspezifische Farbprofile erstellt werden können. Diese dekorspezifischen Farbprofile können erfindungsgemäß mit entsprechenden Urmustern gemäß Verfahrensschritt f. verglichen werden.

Eine weitere Anwendung findet das erfindungsgemäße Verfahren in der Reklamations-überwachung. Bei Reklamationen kann das analoge Dekor, welches Gegenstand der Reklamation ist, gemäß Verfahrensschritt d. verwendet werden, um ein dekorspezifisches Farbprofil zu erstellen. Dieses dekorspezifische Farbprofil kann mit einem entsprechenden Urmuster verglichen werden, womit eine objektive Beurteilung einer Reklamationsanfrage ermöglicht wird.

Weiterhin umfasst die vorliegende Erfindung eine Vorrichtung, insbesondere Druckanlage, welche dazu eingerichtet ist ein Verfahren zum Vergleich eines Referenzfarbprofils oder der Farbraumgröße des Referenzfarbprofils eines analogen Referenzmusters mit einem dekorspezifischen Farbprofil oder der Farbraumgröße des dekorspezifischen Farbprofils eines digitalen oder analogen Dekors gemäß einem der Ansprüche 1 bis 12 durchzuführen. Die Vorrichtung umfasse
- Mindestens ein hyperspektrales Flächenmessgerät;
- Mindestens eine Recheneinheit;
- Optional mindestens ein Mittel zum Drucken einer Dekorvorlage, eines digitalen Farbprofiltargets und/oder eines digitalen Dekors;
- Optional mindestens ein Mittel zur Weiterverarbeitung der auf einen Bedruckstoff gedruckten Dekorvorlage oder des auf einen Bedruckstoff gedruckten Dekors.

In einer Ausführungsform umfasst die Vorrichtung ein hyperspektrales Flächenmessgerät. Geeignete Geräte sind bereits beschrieben worden. In einer weiteren Ausführungsform umfass die Vorrichtung mindestens ein Mittel zur Weiterverarbeitung der auf einen Bedruckstoff gedruckten Dekorvorlage oder des auf einen Bedruckstoff gedruckten Dekors. Ein solches Mittel zur Weiterverarbeitung ist vorzugsweise ausgewählt aus der Gruppe umfassend eine Vorrichtung zum Imprägnieren, eine Vorrichtung zum Verpressen des bedruckten Bedruckstoffes mit weiteren Schichten wie beispielsweise einer Imprägnierschicht und eine Vorrichtung zur Profilierung des bedruckten Bedruckstoffes.

In einer besonders bevorzugten Ausführungsform ist das Mittel zum Verpressen eine Kurztakt-Presse (KT-Presse). In einer weiteren bevorzugten Ausführungsform ist das Mittel zum Profilieren ebenfalls eine Kurztakt-Presse, besonders bevorzugt wird die Kurztakt-Presse mit der das Verpressen durchgeführt wird auch für die Profilierung verwendet. Die Weiterverarbeitung beim Imprägnieren, Verpressen und Profilieren wurde bereits näher beschrieben.

In einer Ausführungsform umfasst die Vorrichtung mehrere Mittel zur Weiterverarbeitung, besonders bevorzugt ist dann ein hyperspektrales Flächenmessgerät vorgesehen ein mit einem Dekor versehenen Bedruckstoff zu vermessen und mindestens ein weiteres hyperspektrales Flächenmessgerät, um den mit einem Dekor bedruckten Bedruckstoff nach zumindest einem Weiterverarbeitungsschritt zu vermessen.

Das Mittel zum Drucken einer Dekorvorlage, eines digitalen Farbprofiltargets und/oder eines digitalen Dekors ist in einer Ausführungsform ein Digitaldrucker.

Die Merkmale des Verfahrens treffen auch auf die erfindungsgemäße Vorrichtung zu und umgekehrt. Insbesondere kann die Vorrichtung in allen Verwendungen des erfindungsgemäßen Verfahrens ebenso eingesetzt werden wie das Verfahren.

Im Folgenden wird die vorliegende Erfindung anhand von 2 Figuren und 3 Ausführungsbeispielen näher erläutert.
- **Figur 1**: stellt schematisch eine Ausführungsform des erfindungsgemäßen Verfahrens dar;
- **Figur 2**: stellt schematisch eine weitere Ausführungsform des erfindungsgemäßen Verfahrens dar.

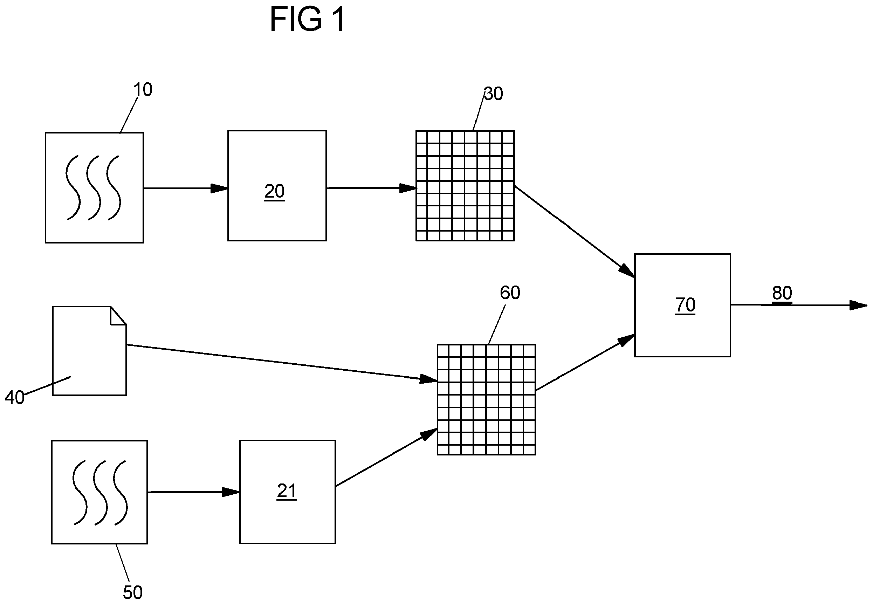

Figur 1 stellt schematisch eine Ausführungsform des erfindungsgemäßen Verfahrens dar. Das analoge Referenzmuster 10 wird abschnittsweise mittels eines hyperspektralen Flächenmessgerätes 20 vermessen. Aus den Messdaten wird anschließend ein Referenzfarbprofil 30 erstellt. Weiterhin wird entweder aus den digitalen Daten eines digitalen Dekors 40 eine dekorspezifisches Farbprofil 60 berechnet oder ein analoges Dekor 50 wird abschnittsweise mittels eines hyperspektralen Flächenmessgerätes 21 vermessen und aus den Messdaten wird das dekorspezifische Farbprofil 60 berechnet. Mittel einer Recheneinheit 70 werden das Referenzfarbprofil und das dekorspezifische Farbprofil miteinander verglichen. Sollten hierbei Abweichungen zwischen dem Referenzfarbprofil und dem dekorspezifische Farbprofil ermittelt werden, so erfolgt eine Reaktion 80. Erfindungsgemäß kann dabei
- ein Signal ausgegeben werden; und/oder
- ein Hinweise für vorzunehmende Änderungen der Druckparameter in einem nachfolgenden Druckprozess erfolgen; und/oder
- können die Druckdaten eines digitalen Dekors automatisch geändert werden; und/oder
- es kann ein korrigiertes dekorspezifisches Farbprofil berechnet werden.

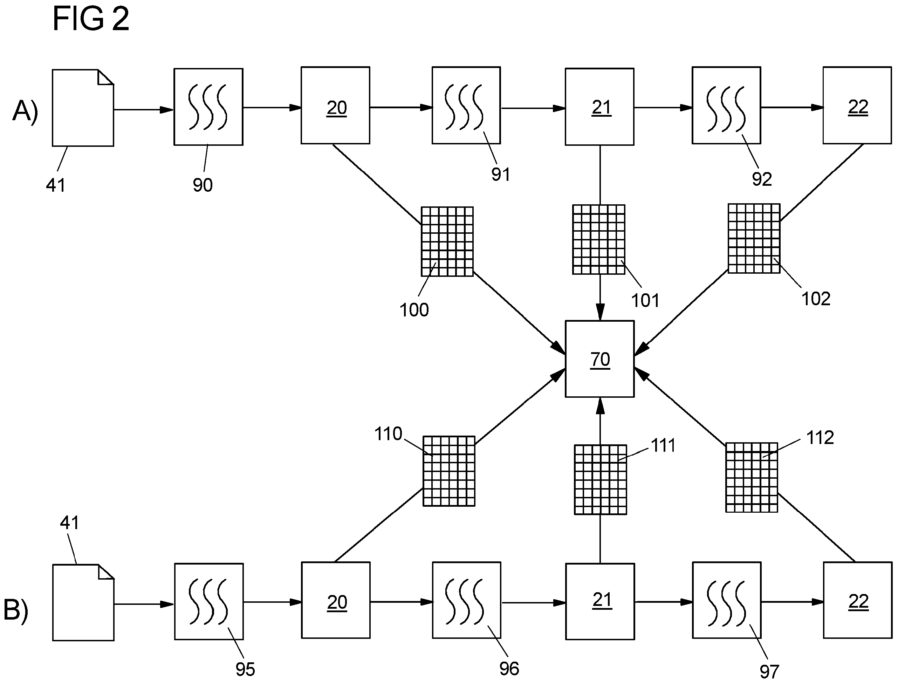

**Figur 2** stellt schematisch eine weitere Ausführungsform des erfindungsgemäßen Verfahrens dar. In Figur 2(A) ist die Erzeugung von Urmustern 100, 101, 102 dargestellt. Mit den digitalen Daten eines digitalen Dekors 41 wird ein analoges Referenzmuster 90 mit einem Digitaldrucker gedruckt. Das analoge Referenzmuster 90 wird abschnittsweise mit einem hyperspektralen Flächenmessgerät 20 vermessen und aus den Messdaten wird ein Referenzfarbprofil 100 erstellt welches gleichzeitig ein Urmuster 100 darstellt. Das analoge Referenzmuster 90 wird in einem Weiterverarbeitungsschritt imprägniert, es entsteht ein imprägniertes analoges Referenzmuster 91. Das imprägnierte analoge Referenzmuster 91 wird mit Hilfe eines hyperspektralen Flächenmessgerätes 21 abschnittsweise vermessen und aus den Messdaten wird ein Referenzfarbprofil 101 erstellt welches gleichzeitig ein Urmuster 101 darstellt. Das imprägnierte analoge Referenzmuster 91 wird in einem weiteren Weiterverarbeitungsschritt in einer Kurztaktpresse verpresst und gleichzeitig profiliert, es entsteht ein weiterverarbeitetes analoges Referenzmuster 92. Das analoge Referenzmuster 92 wird mit Hilfe eines hyperspektralen Flächenmessgerätes 22 abschnittsweise vermessen und aus den Messdaten wird ein Referenzfarbprofil 102 erstellt welches gleichzeitig ein Urmuster 102 darstellt. Die Urmuster 100, 101, 102 sind auf der Recheneinheit 70 gespeichert.

Der weitere Verlauf des Verfahrens ist in Figur 2(B) dargestellt. Mit den digitalen Daten des digitalen Dekors 41 wird ein analoges Dekor 95 mit einem Digitaldrucker gedruckt. Bevorzugt wird hierfür der gleiche Digitaldrucker wie in der Figur 2(A) verwendet. Darüber hinaus sind der Bedruckstoff auf den das digitale Dekor gedruckt wird und die verwendeten Druckparameter identisch zu denen in Figur 2(A). Das analoge Dekor 95 wird abschnittsweise mit einem hyperspektralen Flächenmessgerät 20 vermessen und aus den Messdaten wird ein dekorspezifisches Farbprofil 110. Die verwendeten Abschnitte des analogen Dekors 95 entsprechen dabei den Abschnitten des analogen Referenzmusters 90, die bei der Erstellung des Urmusters 100 verwendet wurden. Durch einen Vergleich des Urmusters 100 mit dem dekorspezifischen Farbprofil 110 durch die Recheneinheit 70 können Abweichungen zwischen dem Urmuster 100 und dem dekorspezifischen Farbprofil 110 festgestellt werden. Somit kann die farbgetreue Widergabe des der digitalen Daten des digitalen Dekors 41 in unterschiedlichen Druckprozessen überwacht werden. Werden Abweichungen festgestellt, so kann durch die bereits beschriebenen Reaktionsmöglichkeiten Einfluss genommen werden.

Das analoge Dekor 95 wird in einem Weiterverarbeitungsschritt imprägniert, es entsteht ein imprägniertes analoges Dekor 96. Das imprägnierte analoge Dekor 96 wird mit Hilfe eines hyperspektralen Flächenmessgerätes 21 abschnittsweise vermessen und aus den Messdaten wird ein dekorspezifisches Farbprofil 111 erstellt. In diesem Schritt entsprechen die verwendeten Abschnitte des imprägnierten analogen Dekors 96 den Abschnitten des analogen Referenzmusters 91, die bei der Erstellung des Urmusters 101 verwendet wurden. Durch einen Vergleich des Urmusters 101 mit dem dekorspezifischen Farbprofil 111 durch die Recheneinheit 70 können wiederum Abweichungen zwischen dem Urmuster 101 und dem dekorspezifischen Farbprofil 111 festgestellt werden.

Das imprägnierte analoge Dekor 96 wird in einem weiteren Weiterverarbeitungsschritt in einer Kurztaktpresse verpresst und gleichzeitig profiliert, es entsteht ein weiterverarbeitetes analoges Dekor 97. Das analoge Dekor 97 wird mit Hilfe eines hyperspektralen Flächenmessgerätes 22 abschnittsweise vermessen und aus den Messdaten wird ein dekorspezifisches Farbprofil 112 erstellt. Entsprechen die vermessenen Abschnitte des analogen Dekors 97 den Abschnitten, die bei der Erstellung des Urmusters 102 verwendet wurden, so können das Urmuster 102 und das dekorspezifische Farbprofil 112 miteinander verglichen werden, um Farbabweichungen zwischen diesen zu ermitteln. Hierfür wird wiederum die Recheneinheit 70 genutzt.

### Ausführungsbeispiel 1 - Druckvorstufe

Bei einer Fußbodenproduktion wird das Verfahren beispielsweise in der Druckvorstufe eines Papierdigitaldruckers eingesetzt. Um die Dekore auf dem Bedruckstoff, in diesem Fall Papier, drucken zu können, musste das Papier zunächst profiliert werden, um den Farbraum zu definieren, welcher auf dem Papier unter bestimmten Druckparametern erreicht werden kann. Dafür wurden mit einer geeigneten Software digitale Farbprofiltargets generiert und unter definierten Druckparametern auf das Papier gedruckt. Die Farbprofiltargets wurden dabei so angeordnet, dass sie mit dem hyperspektralen Flächenmessgerät eingelesen werden können. In einem Beispiel wurden 3000 Farbprofiltargets auf das Papier gedruckt, wobei jedes Farbprofiltarget eine Fläche von 0,5 cm² aufwies. Die auf das Papier gedruckten Farbprofiltargets stellten damit das analoge Referenzmuster dar. Dieses analoge Referenzmuster wurde mit einem hyperspektralen Flächenmessgerät abschnittsweise vermessen. Dabei entsprach ein Abschnitt jeweils der Fläche eines Farbprofiltargets. Insgesamt wurden 3000 Abschnitte und damit alle Farbprofiltargets vermessen. Das Messgerät verwendete, dank hyperspektraler Flächenmessung, einen Mittelwert aus dem gesamten Farbprofiltarget und stellte damit einen repräsentativen Farbwert zur Verfügung. Das Referenzfarbprofil wurde auf Basis dieser Messdaten durch eine Software erstellt.

Auf das Papier sollte ein bestimmtes für den Einsatz im Bereich von Fußböden geeignetes Dekor gedruckt werden. Dieses Dekor lag in digitaler Form vor. Aus dem digitalen Dekor wurden 3 000 dekorspezifische Farbprofiltargets durch eine Software erstellt und gespeichert. Aus den 3 000 dekorspezifischen Farbprofiltargets wurde danach ein dekorspezifisches Farbprofil mit einer Software erstellt.

Der Vergleich des Referenzfarbprofils und des dekorspezifischen Farbprofils zeigte, dass das dekorspezifische Farbprofil keine Farbwerte enthielt, die nicht auch im Referenzfarbprofil enthalten waren. Das Dekor war damit unter den verwendeten Druckparametern auf das Papier druckbar.

### Ausführungsbeispiel 2 - Produktionsüberwachung

Dieses Ausführungsbeispiel veranschaulicht die Produktionsüberwachung beim Bedrucken von Holzwerkstoffplatten für Fußbodenanwendungen. Innerhalb der Produktionsanlage war ein hyperspektrales Flächenmessgerät installiert. Bei den Druckaufträgen wurden am Rand Farbprofiltargets mitgedruckt. Diese wurden während der Produktion durch das hyperspektrale Flächenmessgerät vermessen. Die Vermessung wurde inline, vor der Weiterverarbeitung, an den auf den Bedruckstoffen gedruckten Dekoren durchgeführt. Weiterhin wurde die Vermessung offline nach der Weiterverarbeitung der auf den Bedruckstoffen gedruckten Dekore durchgeführt. Dabei entsprach ein Abschnitt, der hyperspektral vermessen wurde, einem Farbprofiltarget. Aus den Messdaten wurde ein dekorspezifisches Farbprofil erstellt. Das dekorspezifische Farbprofil wurde mit einem zuvor erstellten Urmuster verglichen, welches das Referenzfarbprofil für dieses Dekor enthielt. Bei farblichen Abweichungen zu einem Urmuster ertönten akustische Signale und die Produktion wurde unterbrochen. Darüber hinaus wurden auf Grundlage des dekorspezifischen Farbprofils und des Urmusters ein korrigiertes Farbprofil und damit auch neue Druckdaten mittels Software generiert und die Produktion wurde mit den korrigierten Druckdaten fortgesetzt.

### Ausführungsbeispiel 3 - Weiterverarbeitung

Dieses Ausführungsbeispiel veranschaulicht die Überwachung von Dekordrucken bei der Weiterverarbeitung von Holzwerkstoffplatten für Fußbodenanwendungen. Nach den weiteren Produktionsschritten Imprägnierung, KT-Verpressung, Aufsägen und Profilierung waren weitere hyperspektrale Flächenmessgeräte installiert, mit denen hyperspektrale Flächenmessungen durchgeführt wurden. Nach den jeweiligen Weiterverarbeitungsschritten wurden mit den hyperspektralen Flächenmessgeräten jeweils von einem Abschnitt des analogen Dekors hyperspektrale Flächenmessungen vorgenommen. Aus diesen hyperspektralen Flächenmessungen wurden jeweils dekorspezifische Farbprofile erstellt. Die dekorspezifischen Farbprofile wurden mit einem zuvor erstellten Urmuster des gleichen Abschnitts des Dekors verglichen. Wurde eine Abweichung zwischen dem dekorspezifischen Farbprofil und dem Urmuster festgestellt, ertönte ein akustisches Signal und die Produktion wurde unterbrochen. Auf Grundlage der dekorspezifischen Farbprofile und des Urmusters wurden ein korrigiertes Farbprofil und damit auch neue Druckdaten mittels Software generiert und die Produktion wurde mit den korrigierten Druckdaten fortgesetzt. Zusätzlich erfolgte eine farbliche Chargensortierung am Ende aller Produktionsschritte. Dadurch konnte eine farbliche Sortierung für die Auslieferung der Produkte ermöglicht werden.

### Bezugszeichenliste

- 10: analoges Referenzmuster
- 20, 21, 22: hyperspektrales Flächenmessgerät
- 30: Referenzfarbprofil
- 40, 41: digitale Daten eines digitalen Dekors
- 50: analoges Dekor
- 60: dekorspezifische Farbprofil
- 70: Recheneinheit
- 80: Reaktion
- 90, 91, 92: analoges Referenzmuster
- 95, 96, 97: analoges Dekor
- 100, 101, 102: Urmuster
- 110, 111, 112: dekorspezifische Farbprofile

## Patentansprüche

1. Verfahren zum Vergleich der Farbraumgröße eines Referenzfarbprofils (30) eines analogen Referenzmusters (10) mit der Farbraumgröße eines dekorspezifischen Farbprofils (60) eines digitalen oder analogen Dekors, wobei die Farbraumgröße in einem linearen Farbsystem bestimmt wird, wobei das Verfahren die Schritte umfasst:
a. Einlesen und Speichern von Messdaten mindestens eines Abschnittes eines analogen Referenzmusters (10) mit einem hyperspektralen Flächenmessgerät;
b. Erstellen eines Referenzfarbprofils (30) mittels Software, wobei das Referenzfarbprofil die Mittelwerte der gemessenen Daten des mindestens einen Abschnitts aufweist;
c. Bestimmung und Speicherung der Farbraumgröße des Referenzfarbprofils (30) mittels Software;
d. Erstellen und Speichern eines dekorspezifischen Farbprofils (60) entweder aus den digitalen Daten eines digitalen Dekors (40) oder durch hyperspektrale Flächenmessung zumindest eines Ausschnitts eines analogen Dekors (95), wobei das dekorspezifische Farbprofil die Mittelwerte der gemessenen Daten des mindestens einen Ausschnitts aufweist;
e. Bestimmung und Speicherung der Farbraumgröße des dekorspezifischen Farbprofils (60) mittels Software;
f. Vergleich der Farbraumgröße des Referenzfarbprofils (30) und der Farbraumgröße des dekorspezifischen Farbprofils (60).

2. Verfahren gemäß Anspruch 1, **dadurch gekennzeichnet, dass** das analoge Referenzmuster (10) mindestens ein Farbprofiltarget aufweist und wie folgt erzeugt wird:
• Erstellen und Speichern von mindestens einem digitalen Farbprofiltarget mittels einer Software;
• Ausgabe des mindestens einen digitalen Farbprofiltargets auf einen Bedruckstoff mit einem Ausgabegerät unter definierten Druckparametern.

3. Verfahren gemäß Anspruch 2, **dadurch gekennzeichnet, dass** das analoge Referenzmuster (10) 1 bis 10 000 Farbprofiltargets, bevorzugt 1 000 bis 5 000, besonders bevorzugt 2 500 bis 3 500 Farbprofiltargets aufweist.

4. Verfahren gemäß 2 oder 3, **dadurch gekennzeichnet, dass** das Verfahren die Schritte umfasst
• Erstellen und Speichern von mindestens einem Farbprofiltarget mittels einer Software;
• Ausgabe des mindestens einen Farbprofiltargets auf einen Bedruckstoff mit einem Ausgabegerät unter definierten Druckparametern, wobei das auf den Bedruckstoff ausgegebene mindestens eine Farbprofiltarget das analoge Referenzmuster (10) darstellt;
• Vermessen und Speichern von Messdaten mindestens eines Abschnitts eines analogen Referenzmusters (10) mit einem hyperspektralen Flächenmessgerät;
• Erstellen mindestens eines Referenzfarbprofils (30) mittels Software;
• Bestimmung und Speicherung der Farbraumgröße des Referenzfarbprofils (30) mittels Software;
• Erstellen und Speichern eines digitalen Dekors, wobei das digitale Dekor mindestens ein dekorspezifisches Farbprofiltarget aufweist;
• Erstellen eines dekorspezifischen Farbprofils (60) aus den digitalen Daten des digitalen Dekors (40);
• Bestimmung und Speicherung der Farbraumgröße des dekorspezifischen Farbprofils (60) mittels Software;
• Vergleich der Farbraumgröße des Referenzfarbprofils (30) und der Farbraumgröße des dekorspezifischen Farbprofils (60).

5. Verfahren nach Anspruch 4, **dadurch gekennzeichnet, dass** das digitale Dekor aus den digitalen Daten einer Dekorvorlage oder durch hyperspektrale Flächenmessung zumindest eines Abschnitts eines analogen Dekors (95) erstellt wird.

6. Verfahren nach Anspruch 1, **dadurch gekennzeichnet, dass** das analoge Referenzmuster (10) ausgewählt ist aus der Gruppe enthaltend
• auf Bedruckstoff gedrucktes digitales Dekor;
• weiterverarbeitetes und auf Bedruckstoff gedrucktes digitales Dekor;
wobei die Weiterverarbeitung die Schritte des Imprägnierens, Verpressens und/oder Profilierens des Bedruckstoffs, entweder einzeln oder in Kombination umfasst.

7. Verfahren gemäß einem der vorangegangenen Ansprüche, **dadurch gekennzeichnet, dass** der Vergleich der Farbraumgröße des Referenzfarbprofils (30) und der Farbraumgröße des dekorspezifischen Farbprofils (60) automatisiert mittels Software oder manuell erfolgt.

8. Verfahren gemäß einem der vorangegangenen Ansprüche, **dadurch gekennzeichnet, dass** bei Abweichungen der Farbraumgröße des Referenzfarbprofils (30) von der Farbraumgröße des dekorspezifischen Farbprofils (60)
• ein Signal ausgegeben wird; und/oder
• Hinweise für vorzunehmende Änderungen der Druckparameter in einem nachfolgenden Druckprozess erfolgen; und/oder
• die Druckdaten eines digitalen Dekors automatisch geändert werden; und/oder
• ein korrigiertes dekorspezifisches Farbprofil berechnet wird.

9. Verfahren gemäß einem der vorangegangenen Ansprüche, **dadurch gekennzeichnet, dass** als Ergebnisses des Vergleichs der Farbraumgröße des Referenzfarbprofils (30) und der Farbraumgröße des dekorspezifischen Farbprofils (60) ein Ähnlichkeitsindex ausgegeben wird.

10. Verfahren gemäß Anspruch 9, **dadurch gekennzeichnet, dass**, wenn der Ähnlichkeitsindex unterhalb eines vorgegebenen Sollwertes liegt, das Verfahren weiterhin die Schritte umfasst:
• Ausgabe eines Signals; und/oder
• Ausgabe eines Hinweises für vorzunehmende Änderungen der Druckparameter in einem nachfolgenden Druckprozess; und/oder
• Automatische Änderung der Druckdaten eines digitalen Dekors; und/oder
• Berechnung eines korrigierten dekorspezifischen Farbprofils.

11. Verfahren gemäß einem der vorangegangenen Ansprüche, **dadurch gekennzeichnet, dass** sich das analoge Referenzmuster (10) und/oder das analoge Dekor (95) auf einem Bedruckstoff befindet oder auf einen Bedruckstoff ausgegeben wird, wobei der Bedruckstoff ausgewählt ist aus einer Gruppe enthaltend Papier, Glas, Metall, Folien, Holzwerkstoffe, insbesondere MDF- oder HDF-Platten, WPC-Platten, Furniere, Lackschichten, Kunststoffplatten und anorganische Trägerplatten.

12. Verfahren gemäß einem der vorangegangenen Ansprüche, **dadurch gekennzeichnet, dass** als Ergebnis des Vergleichs der Farbraumgröße des Referenzfarbprofils (30) und der Farbraumgröße des dekorspezifischen Farbprofils (60) ein Qualitätszertifikat erstellt wird, wobei Messdaten des dekorspezifischen Farbprofils (60) mit denen des Referenzfarbprofils (30) verglichen werden und als Nachweis ausgegeben werden.

13. Vorrichtung, insbesondere Druckanlage, dazu eingerichtet ein Verfahren zum Vergleich der Farbraumgröße eines Referenzfarbprofils (30) eines analogen Referenzmusters (10) mit der Farbraumgröße eines dekorspezifischen Farbprofils (60) eines digitalen oder analogen Dekors gemäß einem der Ansprüche 1 bis 12 durchzuführen, umfassend
• Mindestens ein hyperspektrales Flächenmessgerät;
• Mindestens eine Recheneinheit (70);
• Optional mindestens ein Mittel zum Drucken einer Dekorvorlage, eines digitalen Farbprofiltargets und/oder eines digitalen Dekors;
• Optional mindestens ein Mittel zur Weiterverarbeitung der auf einen Bedruckstoff gedruckten Dekorvorlage oder des auf einen Bedruckstoff gedruckten Dekors.

14. Verwendung des Verfahrens gemäß einem der Ansprüche 1 bis 12 oder der Vorrichtung gemäß Anspruch 13 zur Farbraumbestimmung in der Druckvorstufe beim Bedrucken eines Bedruckstoffs mit einem Dekor.

15. Verwendung des Verfahrens gemäß einem der Ansprüche 1 bis 12 oder der Vorrichtung gemäß Anspruch 13 zur Überwachung eines Druckprozesses und von nachfolgenden Weiterverarbeitungsschritte eines Bedruckstoffs.

## Claims

1. Method for comparing the colour space size of a reference colour profile (30) of an analogue reference pattern (10) with the colour space size of a decoration-specific colour profile (60) of a digital or analogue decoration, wherein the colour space size is determined in a linear colour system, wherein the method comprises the steps:
a. reading in and storing measurement data of at least one segment of an analogue reference pattern (10) with a hyperspectral two-dimensional measuring instrument;
b. compiling a reference colour profile (30) by means of software, the reference colour profile having the average values of the measured data of the at least one segment;
c. determining and storing the colour space size of the reference colour profile (30) by means of software;
d. compiling and storing a decoration-specific colour profile (60) either from the digital data of a digital decoration (40) or by hyperspectral two-dimensional measurement of at least one section of an analogue decoration (95), the decoration-specific colour profile having the average values of the measured data of the at least one section;
e. determining and storing the colour space size of the decoration-specific colour profile (60) by means of software;
f. comparing the colour space size of the reference colour profile (30) and the colour space size of the decoration-specific colour profile (60).

2. Method according to Claim 1, **characterized in that** the analogue reference pattern (10) has at least one colour profile target and is generated as follows:
• compiling and storing at least one digital colour profile target by means of a software;
• outputting the at least one digital colour profile target onto a printing substrate with an output instrument under defined printing parameters.

3. Method according to Claim 2, **characterized in that** the analogue reference pattern (10) has from 1 to 10 000 colour profile targets, preferably from 1 000 to 5 000, particularly preferably from 2 500 to 3 500 colour profile targets.

4. Method according to Claim 2 or 3, **characterized in that** the method comprises the steps
• compiling and storing at least one colour profile target by means of a software;
• outputting the at least one colour profile target onto a printing substrate with an output instrument under defined printing parameters, the at least one colour profile target output onto the printing substrate representing the analogue reference pattern (10);
• measuring and storing measurement data of at least one segment of an analogue reference pattern (10) with a hyperspectral two-dimensional measuring instrument;
• compiling at least one reference colour profile (30) by means of software;
• determining and storing the colour space size of the reference colour profile (30) by means of software;
• compiling and storing a digital decoration, the digital decoration having at least one decoration-specific colour profile target;
• compiling a decoration-specific colour profile (60) from the digital data of the digital decoration (40);
• determining and storing the colour space size of the decoration-specific colour profile (60) by means of software;
• comparing the colour space size of the reference colour profile (30) and the colour space size of the decoration-specific colour profile (60).

5. Method according to Claim 4, **characterized in that** the digital decoration is compiled from the digital data of a decoration template or by hyperspectral two-dimensional measurement of at least one segment of an analogue decoration (95).

6. Method according to Claim 1, **characterized in that** the analogue reference pattern (10) is selected from the group containing
• digital decoration printed onto printing substrate;
• digital decoration processed further and printed onto printing substrate;
the further processing comprising the steps of impregnating, pressing and/or profiling the printing substrate, either individually or in combination.

7. Method according to one of the preceding claims, **characterized in that** the comparison of the colour space size of the reference colour profile (30) and the colour space size of the decoration-specific colour profile (60) is carried out in an automated fashion by means of software or manually.

8. Method according to one of the preceding claims, **characterized in that** in the event of deviations of the colour space size of the reference colour profile (30) from the colour space size of the decoration-specific colour profile (60)
• a signal is output; and/or
• indications take place for changes to be carried out of the printing parameters in a subsequent printing process; and/or
• the printing data of a digital decoration are automatically modified; and/or
• a corrected decoration-specific colour profile is calculated.

9. Method according to one of the preceding claims, **characterized in that** a similarity index is output as the result of the comparison of the colour space size of the reference colour profile (30) and the colour space size of the decoration-specific colour profile (60).

10. Method according to Claim 9, **characterized in that**, if the similarity index lies below a predetermined setpoint value, the method furthermore comprises the steps:
• outputting a signal; and/or
• outputting an indication for changes to be carried out of the printing parameters in a subsequent printing process; and/or
• automatically modifying the printing data of a digital decoration; and/or
• calculating a corrected decoration-specific colour profile.

11. Method according to one of the preceding claims, **characterized in that** the analogue reference pattern (10) and/or the analogue decoration (95) is located on a printing substrate or is output onto a printing substrate, the printing substrate being selected from a group containing paper, glass, metal, films, wood-based materials, in particular MDF or HDF panels, WPC panels, veneers, lacquer layers, plastic panels and inorganic carrier panels.

12. Method according to one of the preceding claims, **characterized in that** a quality certificate is compiled as the result of the comparison of the colour space size of the reference colour profile (30) and the colour space size of the decoration-specific colour profile (60), measurement data of the decoration-specific colour profile (60) being compared with those of the reference colour profile (30) and output as corroboration.

13. Device, in particular a printing apparatus, configured to carry out a method according to one of Claims 1 to 12 for comparing the colour space size of a reference colour profile (30) of an analogue reference pattern (10) with the colour space size of a decoration-specific colour profile (60) of a digital or analogue decoration, comprising
• at least one hyperspectral two-dimensional measuring instrument;
• at least one calculation unit (70);
• optionally at least one means for printing a decoration template, a digital colour profile target and/or a digital decoration;
• optionally at least one means for further processing the decoration template printed onto a printing substrate or the decoration printed onto a printing substrate.

14. Use of the method according to one of Claims 1 to 12 or of the device according to Claim 13 for colour space determination in the preprinting stage when printing a decoration on a printing substrate.

15. Use of the method according to one of Claims 1 to 12 or of the device according to Claim 13 for monitoring a printing process and subsequent further-processing steps of a printing substrate.

## Revendications

1. Procédé de comparaison de la dimension de l'espace de couleurs d'un profil de couleurs de référence (30) d'un motif de référence analogique (10) à la dimension de l'espace de couleurs d'un profil de couleurs (60), spécifique au décor, d'un décor numérique ou analogique, la dimension de l'espace de couleurs étant déterminée dans un système de couleurs linéaire, le procédé comprenant les étapes suivantes :
a. lire et mémoriser des données de mesure d'au moins une portion d'un motif de référence analogique (10) à l'aide d'un appareil de mesure de surface hyper-spectrale ;
b. établir un profil de couleurs de référence (30) à l'aide d'un logiciel, le profil de couleurs de référence comprenant les valeurs moyennes des données mesurées de l'au moins une portion ;
c. déterminer et mémoriser la dimension de l'espace de couleurs du profil de couleurs de référence (30) à l'aide d'un logiciel ;
d. établir et mémoriser un profil de couleurs (60) spécifique au décor soit à partir des données numériques d'un décor numérique (40) soit par mesure de surface hyper-spectrale d'au moins une section d'un décor analogique (95), le profil de couleurs spécifique au décor comportant les valeurs moyennes des données mesurées de l'au moins une section ;
e. déterminer et mémoriser la dimension de l'espace de couleurs du profil de couleurs (60) spécifique au décor à l'aide d'un logiciel ;
f. comparer la dimension de l'espace de couleurs du profil de couleurs de référence (30) à la dimension de l'espace de couleurs du profil de couleurs (60) spécifique au décor.

2. Procédé selon la revendication 1, **caractérisé en ce que** le motif de référence analogique (10) présente au moins une cible de profil de couleurs et est généré de la manière suivante :
• établir et mémoriser au moins une cible de profil de couleurs numérique à l'aide d'un logiciel ;
• délivrer l'au moins une cible de profil de couleurs numérique sur un support d'impression à l'aide d'un appareil de délivrance avec des paramètres d'impression définis.

3. Procédé selon la revendication 2, **caractérisé en ce que** le motif de référence analogique (10) comporte 1 à 10000 cibles de profil de couleurs, de préférence 1000 à 5000, de manière particulièrement préférée 2500 à 3500 cibles de profil de couleurs.

4. Procédé selon la revendication 2 ou 3, **caractérisé en ce que** le procédé comprend les étapes suivantes
• établir et mémoriser au moins une cible de profil de couleurs à l'aide d'un logiciel ;
• délivrer l'au moins une cible de profil de couleurs sur un support d'impression à l'aide d'un appareil de délivrance avec des paramètres d'impression définis, l'au moins une cible de profil de couleurs délivrée sur le support d'impression représentant le motif de référence analogique (10) ;
• mesurer et mémoriser des données de mesure d'au moins une portion d'un motif de référence analogique (10) à l'aide d'un appareil de mesure de surface hyper-spectrale ;
• établir au moins un profil de couleurs de référence (30) à l'aide d'un logiciel ;
• déterminer et mémoriser la dimension de l'espace de couleurs du profil de couleurs de référence (30) à l'aide d'un logiciel ;
• établir et mémoriser un décor numérique, le décor numérique comportant au moins une cible de profil de couleurs spécifique au décor ;
• établir un profil de couleurs (60) spécifique au décor à partir des données numériques du décor numérique (40) ;
• déterminer et mémoriser la dimension de l'espace de couleurs du profil de couleurs (60) spécifique au décor à l'aide d'un logiciel ;
• comparer la dimension de l'espace de couleurs du profil de couleurs de référence (30) à la dimension de l'espace de couleurs du profil de couleurs (60) spécifique au décor.

5. Procédé selon la revendication 4, **caractérisé en ce que** le décor numérique est établi à partir des données numériques d'un modèle de décor ou par mesure de surface hyper-spectrale d'au moins une portion d'un décor analogique (95).

6. Procédé selon la revendication 1, **caractérisé en ce que** le motif de référence analogique (10) est choisi dans le groupe contenant
• un décor numérique imprimé sur un support d'impression ;
• un décor numérique traité ultérieurement imprimé sur un support d'impression ;
le traitement ultérieur comprenant les étapes d'imprégnation, de pressage et/ou de profilage du support d'impression, soit individuellement, soit en combinaison.

7. Procédé selon l'une des revendications précédentes, **caractérisé en ce que** la comparaison de la dimension de l'espace de couleurs du profil de couleurs de référence (30) à la dimension de l'espace de couleurs du profil de couleurs (60) spécifique au décor est effectuée automatiquement à l'aide d'un logiciel ou manuellement.

8. Procédé selon l'une des revendications précédentes, **caractérisé en ce que**, si la dimension de l'espace de couleurs du profil de couleurs de référence (30) s'écarte de la dimension de l'espace de couleurs du profil de couleurs (60) spécifique au décor
• un signal est délivré ; et/ou
• des indications sur les modifications des paramètres d'impression à apporter sont effectuées lors d'un processus d'impression ultérieur ; et/ou
• les données d'impression d'un décor numérique sont modifiées automatiquement ; et/ou
• un profil de couleurs corrigé spécifique au décor est calculé.

9. Procédé selon l'une des revendications précédentes, **caractérisé en ce qu'**un indice de similarité est délivré à la suite de la comparaison de la dimension de l'espace de couleurs du profil de couleurs de référence (30) à la dimension de l'espace de couleurs du profil de couleurs (60) spécifique au décor.

10. Procédé selon la revendication 9, **caractérisé en ce que**, si l'indice de similarité est inférieur à une valeur de consigne spécifiée, le procédé comprend en outre les étapes suivantes :
• délivrer un signal ; et/ou
• délivrer une indication sur les modifications des paramètres d'impression à apporter lors d'un processus d'impression ultérieur ; et/ou
• modifier automatiquement les données d'impression d'un décor numérique ; et/ou
• calculer un profil de couleurs corrigé spécifique au décor.

11. Procédé selon l'une des revendications précédentes, **caractérisé en ce que** le motif de référence analogique (10) et/ou le décor analogique (95) se trouvent sur un support d'impression ou sont imprimés sur un support d'impression, le support d'impression étant choisi dans un groupe comprenant le papier, le verre, le métal, des feuilles, des matériaux en bois, en particulier des panneaux MDF ou HDF, des panneaux WPC, des placages, des couches de laque, des panneaux en matière synthétique et des panneaux de support inorganiques.

12. Procédé selon l'une des revendications précédentes, **caractérisé en ce qu'**un certificat de qualité est établi à la suite de la comparaison de la dimension de l'espace de couleurs du profil de couleurs de référence (30) à la dimension de l'espace de couleurs du profil de couleurs (60) spécifique au décor, les données de mesure du profil de couleurs (60) spécifique au décor étant comparées à celles du profil de couleurs de référence (30) et délivrées comme justification.

13. Dispositif, en particulier installation d'impression, configuré pour mettre en œuvre un procédé de comparaison de la dimension de l'espace de couleurs d'un profil de couleurs de référence (30) d'un motif de référence analogique (10) à la dimension de l'espace de couleurs d'un profil de couleurs (60) spécifique au décor d'un décor numérique ou analogique selon l'une des revendications 1 à 12, ledit dispositif comprenant
• au moins un appareil de mesure de surface hyper-spectrale ;
• au moins une unité de calcul (70) ;
• éventuellement au moins un moyen d'impression d'un modèle de décor, d'une cible de profil de couleurs numérique et/ou d'un décor numérique ;
• éventuellement au moins un moyen de traitement ultérieur du modèle de décor imprimé sur un support d'impression ou du décor imprimé sur un support d'impression.

14. Utilisation du procédé selon l'une des revendications 1 à 12 ou du dispositif selon la revendication 13 pour la détermination de l'espace de couleurs au stade d'impression préliminaire lors de l'impression d'un support d'impression avec un décor.

15. Utilisation du procédé selon l'une des revendications 1 à 12 ou du dispositif selon la revendication 13 pour surveiller un processus d'impression et des étapes de traitement ultérieur suivantes d'un support d'impression.
